# EUROPEAN PATENT APPLICATION

(11) **EP 4 579 488 A1**
(43) Date of publication of application: **02.07.2025**
(21) Application number: 24222131.5
(22) Date of filing: 20.12.2024
(51) Int. Cl.: G06F 16/93

(54) **ANALYTICAL REPORT GENERATION**

(30) Priority: 26.12.2023 US 202318395781
(71) Applicant: Honeywell International Inc., Charlotte, NC 28202 (US)
(72) Inventor: SINGH, Ankit, Charlotte, 28202 (US)
(74) Representative: Haseltine Lake Kempner LLP

(57) **Abstract**

Approaches for generation of an analytical report, are described. According to one example, an analytical report having analytical data associated with an organization and comprising one or more chapters may be obtained. Each chapter may comprise at least a subset of the analytical data. A first set of attributes corresponding to the analytical report and a second set of attributes corresponding to each chapter may be obtained. The first set of attributes may be analyzed to identify a set of visual indicators associated with the analytical report. For each chapter, the first set of attributes, the second set of attributes, and a third set of attributes corresponding to each visual indicator of the set of visual indicators may be analyzed to determine a visual indicator for representing the subset within the chapter. For each chapter, the visual indicator may be incorporated into the chapter to generate a final analytical report.

## Description

### BACKGROUND

Analytical reports are widely used in organizations for various purposes. For instance, analytical reports may be used for analysis of an organization's finances. Analytical reports may also be used for analysis of performance of an organization's operations. Analytical reports may also be used for analysis of market trends, new products, preference of consumers, etc. Examples of analytical reports may include audit reports, reports for Food and Drug Administration (FDA) approval, product sales reports, etc. Apart from providing analytical data associated with an organization in textual form, the analytical report may also include visual representations of the analytical data in the form of charts or graphs.

### BRIEF DESCRIPTION OF FIGURES

Systems and/or methods are now described, in accordance with examples of the present subject matter and with reference to the accompanying figures, in which:
FIG. 1 illustrates a communication environment implementing a system for generating an analytical report, according to an example;
FIG. 2 illustrates a communication environment implementing a system for generating an analytical report, according to another example;
FIG. 3A and FIG. 3B illustrate different stages of generating an analytical report using an analytical report generation system, according to an example;
FIG. 4 illustrate a method for generating an analytical report, according to an example;
FIG. 5A to FIG. 5C illustrates a method for generating an analytical report based on an association mapping between various attributes related to the analytical report, according to another example;
FIG. 6A to FIG. 6D illustrate a method for generating an analytical report based on probability scores associated with various visual indicators that are available for incorporation in the analytical report, according to another example;
FIG. 7A and FIG. 7B illustrate a method for generating an analytical report based on weightage scores associated with various attributes related to the analytical report, and probability scores associated with various visual indicators that are available for incorporation in the analytical report, according to another example; and
FIG. 8 illustrates a computing environment implementing a non-transitory computer-readable medium for generating an analytical report, according to an example.

### DETAILED DESCRIPTION

An analytical report is a document that may include one or more visual indicators that graphically represent analytical data relevant to the purpose of the analytical report. Examples of a visual indicator may include, but are not limited to, a chart, a graph, a dashboard, etc. In one example, the dashboard may further include one or more charts or graphs. Typically, each analytical report may include multiple sub-sections or chapters, with each chapter having one or more visual indicators. For example, if the analytical report is a product sales report, the analytical report may include multiple visual indicators representing sales data of a product of an enterprise. The analytical report may include multiple chapters, such as chapters depicting an organization's sales data in different regions, chapters depicting sales data for different products of the organization, and chapters focusing on sales and revenue of different departments of the organization. Each such chapter may include text as well as combinations of visual indicators, such as dashboards, to represent sales data for the different regions or the different products.

Typically, the analytical report is manually prepared by one or more individuals. While the individuals use different business intelligence (BI) tools as source for the one or more visual indicators, the user needs to manually identify, select, and associate different visual indicators with different chapters of the analytical report. Manual preparation of the analytical report is a time consuming and tedious task consuming a lot of processing resources. For example, while preparing the analytical report on an electronic device, an individual preparing the analytical report may have to configure and customize various visual indicators before finalizing one or more visual indicators to be used in the analytical report. This may lead to wastage of manual and processing resources that are consumed for generating and analysing various visual indicators which eventually may not even be used in the analytical report.

Further, the analytical report is required to represent the analytical data in a manner which is easy to understand so that any decision based on the analytical data can be easily made. For example, if the analytical report is the product sales report, an individual referring the product sales report should be able to easily make a decision, based on the represented sales data, about changing or maintaining a supply rate of the product to a region of the plurality of regions. Currently, if the user preparing the analytical report is not able to find the most suitable visual indicators for incorporating in the analytical report, the user may settle on any visual indicator according to their understanding and skill. Thus, for an analytical report to have an acceptable quality, currently, the user must be a professional skilled in preparing the analytical report. Even if the analytical report is prepared by skilled professionals, the quality of the analytical report is highly dependent on the skill level of the user, which is not desirable as different individuals may have varying skill levels, thereby, affecting the quality of the analytical report.

Approaches for generating an analytical report comprising one or more chapters are described. The analytical report may have analytical data associated with an organization. Each of the one or more chapters may comprise at least a subset of the analytical data.

The present subject matter facilitates in automated identification, selection, and allocation of one or more visual indicators to different chapters of the analytical report. In one example, initially a first set of attributes corresponding to the analytical report may be analyzed to identify a set of visual indicators associated with the analytical report. The visual indicators may provide graphical representations of the analytical data present in the analytical report. For each chapter of the one or more chapters, the present subject matter uses the first set of attributes, a second set of attributes corresponding to the chapter, and a third set of attributes corresponding to each visual indicator of the set of visual indicators, for determining at least one visual indicator, from the set of visual indicators, for representing the subset of the analytical data within the chapter. In an example, the first set of attributes, the second set of attributes, and the third set of attributes may be processed by a visual indicator allocation model to determine the at least one visual indicator. The visual indicator allocation model may be trained using one or more historical analytical reports. For each chapter of the analytical report, the at least one visual indicator may be incorporated into the chapter to generate a final analytical report. Thus, a simple and robust methodology is provided for quick assignment of visual indicators to the chapters of the analytical report.

In an example, the first set of attributes, the second set of attributes, and the third set of attributes may be processed based on an association mapping generated by the visual indicator allocation model. The association mapping may indicate a relationship between the chapters, the visual indicators, and the analytical report.

In another example, the first set of attributes, the second set of attributes, and the third set of attributes may be processed based on a probability score corresponding to each visual indicator of the set of visual indicators. The probability score may indicate a probability of the visual indicator occurring in the chapter of the analytical report. In an example, for each attribute of the first set of attributes, the second set of attributes, and the third set of attributes, a pre-assigned weighted score may be determined. The pre-assigned weighted score may indicate comparative weightage of the attribute for computing the probability score. The probability score corresponding to each visual indicator may be computed taking the pre-assigned weighted score of each attribute into consideration. For each chapter, the association mapping or the probability score corresponding to each visual indicator may be analyzed to determine at least one visual indicator for representing the subset of the analytical data within the chapter. The at least one visual indicator selected for the different chapters may be subsequently incorporated into the chapters to generate a final analytical report.

The described approaches thus automatically identify and assign at least one visual indicator to each chapter of the analytical report without a need for an input from a user. Therefore, an analytical report may be easily and quickly generated without wasting processing resources. The described approaches significantly reduce the power consumed by an electronic device for generation of the analytical report, thereby increasing the battery life of the electronic device.

Further, the described approaches are not dependent on the skill level of an individual. The probability of the visual indicator occurring in the chapter is calculated based on the statistical analysis of the one or more attributes corresponding to the analytical report, the chapters, and the visual indicators. Therefore, the interconnection between the visual indicators and the chapters is accurately identified. The described approaches take into consideration the context of the analytical report and the chapters of the analytical report. As a result, a final analytical report, including desired visual indicators may be generated, which is easy to understand and comprehend.

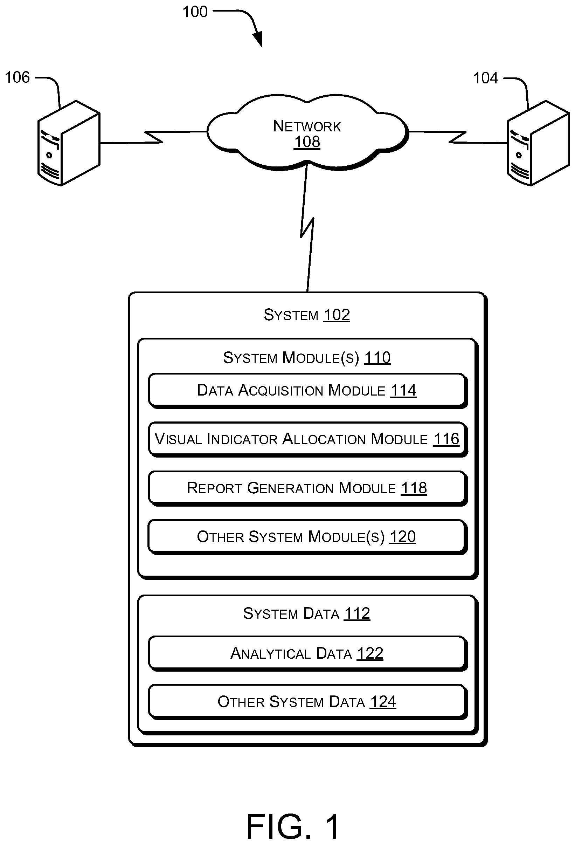

The present subject matter is further described with reference to FIG. 1 to FIG. 8. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

FIG. 1 illustrates a communication environment 100 implementing a system 102 for generating an analytical report, according to an example. The analytical report may have analytical data associated with an organization. In one example, the analytical report may include one or more chapters with each of the one or more chapters comprising at least a subset of the analytical data. For example, a commercial company may be the organization and a product sales report may be the the analytical report about sales of products sold by the organization. The product sales report may include multiple visual indicators representing sales data of the products. The visual indicators may provide graphical representation of the analytical data present in the analytical report. The analytical report may further include multiple chapters describing different aspects or details of the product sales. For example, the analytical report may include chapters depicting the sales data in different regions, chapters depicting sales for different products of the organization, and chapters focusing on sales and revenue of different departments of the organization. Each such chapter may include combinations of text and visual indicators, such as dashboards, to represent the sales data for the different regions or the different products.

The communication environment 100 may further include a business intelligence (BI) tool server 104 and a report generating application server 106. The system 102 may be a device, such as an electronic device, that may be operated by a user for generating the analytical report. Examples of the electronic device may include, but are not limited to, a laptop, a desktop, a tablet computer, and a smart phone.

The BI tool server 104 may be configured to host a BI tool. The BI tool may be a software application that may be installed on the system 102. The BI tool may be accessed by a user, through the system 102, to configure and customize various visual indicators. The customized visual indicators may be stored in the BI tool server for future use in various analytical reports. In an example, the BI tool server 104 may store and maintain data associated with the BI tool, and give authorized users access to the data. In one example, the BI tool server 104 may be hosted virtually, for example, on a cloud-based platform at a site or away from the site. In another example, the BI tool server 104 may be a stand-alone physical system geographically located either on the site or away from the site. Examples of the site may include, but are not limited to, a building of a company, or any other working environments in any industry or enterprise. The building may be a commercial establishment, for example, a commercial complex, an industrial establishment, a data center, and a storage facility. Further, a building may also refer to a combination of two or more structures or compounds.

The report generating application server 106 may be configured to host a report generating application. The report generating application may be a software application that may be installed on the system 102. The report generating application may be accessed by a user, through the system 102, to finalize and generate the analytical report after incorporating the visual indicators, as required, in the analytical report. In an example, the report generating application server 106 may store and maintain data associated with the analytical report, and give authorized users access to the data. In one example, the report generating application server 106 may be hosted virtually, for example, on a cloud-based platform at a site or away from the site. In another example, the report generating application server 106 may be a stand-alone physical system geographically located either on the site or away from the site. Examples of the site may include, but are not limited to, a building of a company, or any other working environments in any industry or enterprise. The building may be a commercial establishment, for example, a commercial complex, an industrial establishment, a data center, and a storage facility. Further, a building may also refer to a combination of two or more structures or compounds.

In an example, the BI tool server 104 and the report generating application server 106 may be managed and owned by different entities, and may be located at different geographical locations. In another example, the BI tool server 104 and the report generating application server 106 may be managed and owned by same entities, and may be co-located at a same geographical location.

The system 102, the BI tool server 104, and the report generating application server 106 may be communicably coupled with each other over a network 108 and may exchange data and signals over the network 108. The network 108 may be a wireless network, a wired network, or a combination thereof. The network 108 may also be an individual network or a collection of many such individual networks, interconnected with each other and functioning as a single large network, e.g., the Internet or an intranet. Examples of such individual networks include, but are not limited to, local area network (LAN), wide area network (WAN), the internet, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Public Switched Telephone Network (PSTN), and Integrated Services Digital Network (ISDN). Depending on the technology, the network 108 may include various network entities, such as transceivers, gateways, and routers. In an example, the network 108 may include any communication network that uses any of the commonly used protocols, for example, Hypertext Transfer Protocol (HTTP), and Transmission Control Protocol/Internet Protocol (TCP/IP).

The system 102 may include system module(s) 110 and system data 112. The system 102 may also include components, other than the depicted components, such as display, input/output interfaces, operating systems, applications, and other software or hardware components (not shown in the figures).

The system module(s) 110 may be implemented as a combination of hardware and programming, for example, programmable instructions to implement a variety of functionalities of the system module(s) 110. In examples described herein, such combinations of hardware and programming may be implemented in several different ways. For example, the programming for the system module(s) 110 may be executable instructions. Such instructions may be stored on a non-transitory machine-readable storage medium which may be coupled either directly with the system 102 or indirectly (for example, through networked means). In an example, the system module(s) 110 may include a processing resource, for example, either a single processor or a combination of multiple processors, to execute such instructions. In the present examples, the non-transitory machine-readable storage medium may store instructions that, when executed by the processing resource, implement the system module(s) 110. In other examples, the system module(s) 110 may be implemented as electronic circuitry.

In one example, the system module(s) 110 may include a data acquisition module 114, a visual indicator allocation module 116, a report generation module 118, and other system module(s) 120. The other system module(s) 120 may further implement functionalities that supplement functions performed by the system 102 or any of the system module(s) 110.

The system data 112 includes data that is either received, stored, or generated as a result of functions implemented by any of the system module(s) 110 or the system 102. It may be further noted that information stored and available in the system data 112 may be utilized by the system module(s) 110 for performing various functions by the system 102. In an example, the system data 112 may include analytical data 122 and other system data 124. The other system data 124 may include data generated by the system module(s) 110. It may be noted that such examples are only indicative. The present approaches may be applicable to other examples without deviating from the scope of the present subject matter. The analytical data 122 may be defined as data, such as sales data, associated with the organization, at least a part of which is desired to be graphically represented through visual indicators in the analytical report.

In operation, the data acquisition module 114 of the system 102 may obtain an analytical report having analytical data associated with an organization. The organization may be a particular organization for which the analytical report is to be finalized. The analytical data may be the analytical data 122. The analytical data may pre-stored in the system 102. In an example, the analytical report may comprise one or more chapters with each of the one or more chapters comprising at least a subset of the analytical data. The one or more chapters may, hereinafter, be collectively referred to as chapters and individually as chapter..

The visual indicator allocation module 116 of the system 102 may implement a visual indicator allocation model for identifying visual indicators that may be included in the different chapters of the analytical report. For example, the visual indicator allocation module 116 may identify a first set of attributes corresponding to the analytical report and a second set of attributes corresponding to each chapter. In an example, the first set of attributes may comprise an organization attribute corresponding to the particular organization, a user attribute corresponding to a particular user associated with the particular organization and using a particular report generating application to finalize the analytical report, and an application attribute corresponding to the particular report generating application. Examples of the second set of attributes corresponding to a particular chapter of the chapters may include, but are not limited to, an ID, a name, a type, and a description of the particular chapter.

In an example, the visual indicator allocation module 116 may analyze the first set of attributes to identify a set of visual indicators associated with the analytical report. In an example, the set of visual indicators may include visual indicators that may be accessed by the particular user for the particular organization in the particular report generating application.

In an example, the visual indicator allocation module 116 may receive an association mapping between the first set of attributes, the second set of attributes, and a third set of attributes corresponding to each visual indicator of the set of visual indicators. Examples of the third set of attributes for the visual indicator may include, but are not limited to, an ID of the visual indicator, a type of the visual indicator, an x-axis field of the visual indicator, a y-axis field of the visual indicator, and a BI tool ID of the BI tool that is used to customize the visual indicator. In an example, the association mapping may indicate a relationship between the first set of attributes, the second set of attributes, and the third set of attributes based on statistical analysis of one or more historical analytical reports. For example, the association mapping may indicate if a particular visual indicator is used, by a particular user of a particular organization, in a particular chapter of a particular analytical report while using a particular report generating application.

In an example, for each chapter, the visual indicator allocation module 116 may analyze the association mapping to determine at least one visual indicator for representing the subset of the analytical data within the chapter. For the sake of brevity, the at least one visual indicator may hereinafter alternatively be referred to as the determined visual indicator. For example, if the association mapping indicates that the particular visual indicator is used, by the particular user of the particular organization, in the particular chapter of the particular analytical report while using the particular report generating application, the particular visual indicator may be determined as the at least one visual indicator.

For each chapter of the analytical report, the report generation module 118 of the system 102 may incorporate the determined visual indicator into the chapter to generate a final analytical report. Thus, the visual indicators for each chapter of the analytical report are automatically identified and incorporated in the analytical report, in real-time, without a need for an input from a user.

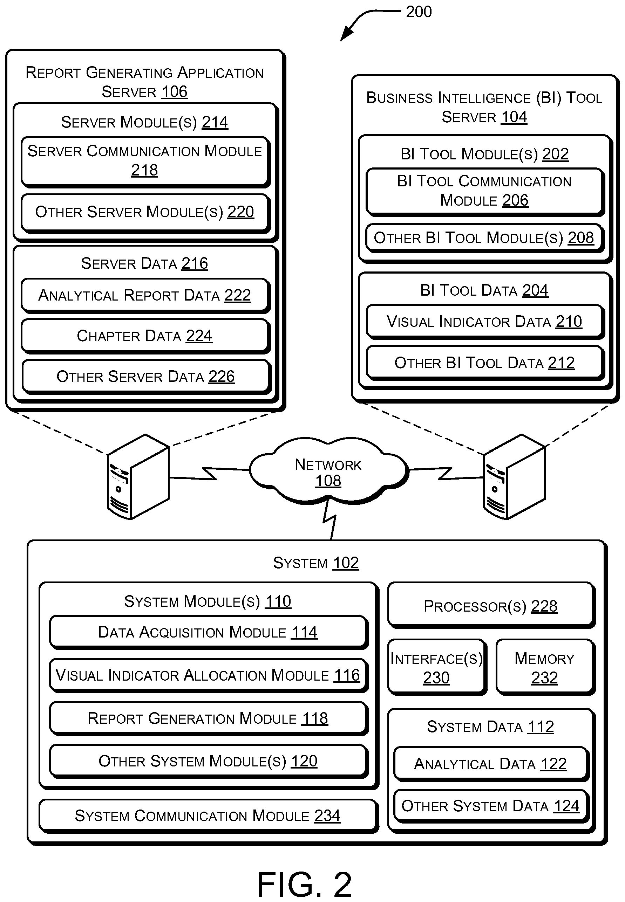

FIG. 2 illustrates a communication environment 200 implementing the system 102, according to another example. In one example, the communication environment 200 may include the system 102, the BItool server 104, and the report generating application server 106. The system 102, the BI tool server 104, and the report generating application server 106 may be communicably coupled with each other over the network 108.

In one example, the BI tool server 104 may include BI tool module(s) 202 and BI tool data 204. The BI tool server 104 may include components, other than the depicted components, such as display, processor(s), input/output interfaces, operating systems, applications, and other software or hardware components (not shown in the figures).

The BI tool module(s) 202 may be implemented as a combination of hardware and programming, for example, programmable instructions to implement a variety of functionalities of the BI tool module(s) 202. In examples described herein, such combinations of hardware and programming may be implemented in several different ways. For example, the programming for the BI tool module(s) 202 may be executable instructions. Such instructions may be stored on a non-transitory machine-readable storage medium which may be coupled either directly with the BI tool server 104 or indirectly (for example, through networked means). In an example, the BI tool module(s) 202 may include a processing resource, for example, either a single processor or a combination of multiple processors, to execute such instructions. In the present examples, the non-transitory machine-readable storage medium may store instructions that, when executed by the processing resource, implement BI tool module(s) 202. In other examples, the BI tool module(s) 202 may be implemented as electronic circuitry.

In one example, the BI tool module(s) 202 may include a BI tool communication module 206 and other BI tool module(s) 208. The other BI tool module(s) 208 may further implement functionalities that supplement functions performed by the BI tool server 104 or any of the BI tool module(s) 202. The BI tool communication module 206 may be a wireless communication module. Examples of the BI tool communication module 206 may include, but are not limited to, Global System for Mobile communication (GSM) modules, Code-division multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the BI tool communication module 206 may also include one or more antennas to enable wireless transmission and reception of data and signals.

The BI tool data 204 includes data that is either received, stored, or generated as a result of functions implemented by any of the BI tool module(s) 202 or the BI tool server 104. It may be further noted that information stored and available in the BI tool data 204 may be utilized by the BI tool module(s) 202 for performing various functions by the BI tool server 104. The BI tool data 204 may include visual indicator data 210 and other BI tool data 212. The visual indicator data 210 may include various visual indicators customized by users of various organizations and attributes associated with each of the visual indicators. Examples of the attributes for the visual indicator may include, but are not limited to, an ID of the visual indicator, a type of the visual indicator, an x-axis field of the visual indicator, a y-axis field of the visual indicator, or a BI tool ID of the BI tool that is used to customize the visual indicator. For example, the type of the visual indicator may be a bar graph, a pir chart, etc. The attributes for the visual indicator may be alternatively herein referred to as the third set of attributes. The other BI tool data 212 includes data that is either received, stored, or generated as a result of functions implemented by any of the BI tool module(s) 202 or the BI tool server 104.

In one example, the report generating application server 106 may include server module(s) 214 and server data 216. The report generating application server 106 may include components, other than the depicted components, such as display, processor(s), input/output interfaces, operating systems, applications, and other software or hardware components (not shown in the figures).

The server module(s) 214 may be implemented as a combination of hardware and programming, for example, programmable instructions to implement a variety of functionalities of the server module(s) 214. In examples described herein, such combinations of hardware and programming may be implemented in several different ways. For example, the programming for the server module(s) 214 may be executable instructions. Such instructions may be stored on a non-transitory machine-readable storage medium which may be coupled either directly with the report generating application server 106 or indirectly (for example, through networked means). In an example, the server module(s) 214 may include a processing resource, for example, either a single processor or a combination of multiple processors, to execute such instructions. In the present examples, the non-transitory machine-readable storage medium may store instructions that, when executed by the processing resource, implement server module(s) 214. In other examples, the server module(s) 214 may be implemented as electronic circuitry.

In one example, the server module(s) 214 may include a server communication module 218 and other server module(s) 220. The other server module(s) 220 may further implement functionalities that supplement functions performed by the report generating application server 106 or any of the server module(s) 214. The server communication module 218 may be a wireless communication module. Examples of the server communication module 218 may include, but are not limited to, Global System for Mobile communication (GSM) modules, Code-division multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the server communication module 218 may also include one or more antennas to enable wireless transmission and reception of data and signals.

The server data 216 includes data that is either received, stored, or generated as a result of functions implemented by any of the server module(s) 214 or the report generating application server 106. It may be further noted that information stored and available in the server data 216 may be utilized by the server module(s) 214 for performing various functions by the report generating application server 106. The server data 216 may include analytical report data 222, chapter data 224, and other server data 226. The analytical report data 222 may include attributes associated with the analytical report and the chapter of the analytical report. For example, the analytical report data 222 may include organization attributes corresponding to various organizations that access various report generating applications hosted by the report generating application server 106. Further, the analytical report data 222 may include user attributes corresponding to various users associated with the organizations. The analytical report data 222 may further include application attributes corresponding to the report generating applications. Examples of the organization attributes may include, but are not limited to, an ID associated with a particular organization and a name of the particular organization. Examples of the user attributes may include, but are not limited to, an ID associated with a particular user, a name of the particular user, a name of the particular organization with which the particular user is associated, and a department of the particular organization in which the particular user works. Examples of the application attributes may include, but are not limited to, an ID associated with a particular report generating application and a name of the particular report generating application. The chapter data 224 may include attributes associated with the chapters of the analytical report. Examples of the attributes associated with the chapters may include, but are not limited to, an ID of the analytical report in which a particular chapter is included, an ID associated with the particular chapter, a title associated with the particular chapter, a type of the particular chapter, and a description of the particular chapter. The other server data 226 includes data that is either received, stored, or generated as a result of functions implemented by any of the server module(s) 214 or the report generating application server 106.

In one example, the system 102 may include processor(s) 228, interface(s) 230, memory 232, a system communication module 234, the system module(s) 110, and the system data 112. The system 102 may include components, other than the depicted components, such as display, input/output interfaces, operating systems, applications, and other software or hardware components (not shown in the figures).

The processor(s) 228 may be implemented as microprocessors, microcomputers, microcontrollers, digital signal processors, central processing units, state machines, logic circuitries, and/or other devices that manipulate signals based on operational instructions. The interface(s) 230 may allow the connection or coupling of the system 102 with one or more other devices, such as the BI tool server 104 and the report generating application server 106, through a wired (e.g., Local Area Network, i.e., LAN) connection or through a wireless connection (e.g., Bluetooth^{®}, Wi-Fi). The interface(s) 230 may also enable intercommunication between different logical as well as hardware components of the system 102.

The memory 232 may be a computer-readable medium, examples of which include volatile memory (e.g., RAM), and/or non-volatile memory (e.g., Erasable Programmable read-only memory, i.e., EPROM, flash memory, etc.). The memory 232 may be an external memory, or internal memory, such as a flash drive, a compact disk drive, an external hard disk drive, or the like. The memory 232 may further include system data 112 and/or other system data which either may be received, utilized, or generated during the operation of the system 102.

The system communication module 234 may be a wireless communication module. Examples of the system communication module 234 may include, but are not limited to, Global System for Mobile communication (GSM) modules, Code-division multiple access (CDMA) modules, Bluetooth modules, network interface cards (NIC), Wi-Fi modules, dial-up modules, Integrated Services Digital Network (ISDN) modules, Digital Subscriber Line (DSL) modules, and cable modules. In one example, the system communication module 234 may also include one or more antennas to enable wireless transmission and reception of data and signals. The system communication module 234 may allow the system 102 to transmit data and signals to one or more other devices, such as the BI tool server 104 and the report generating application server 106, and receive data and signals from the one or more other devices.

In one example, the system module(s) 110 may include the data acquisition module 114, the visual indicator allocation module 116, the report generation module 118, and the other system module(s) 120, as explained with reference to FIG. 1. Further, the system data 112 may include analytical data 122 and other system data 124, as explained with reference to FIG. 1.

As previously mentioned, one or more users intending to include one or more visual indicators in an analytic report may use the system 102 to automatically populate the visual indicators in different chapters of the analytic report. In one example, a user, say, a first user of an organization may initially access a BI tool associated with the system 102 and the organization to customize and create various visual indicators for being used by users of the organization with which the first user is associated. Subsequently other users, such as a second user may use the system 102 to automatically populate the visual indicators in different chapters of the analytic report.

In operation, to create the visual indicators, the first user may access the system 102 to log-in into the BI tool installed in the system 102. The system 102 may thus receive a BI tool log-in request from the first user for logging into the BI tool installed in the system 102. The BItool log-in request may include BI tool log-in credentials, such as a user ID and a password, entered by the first user. The system 102 may query the BI tool server 104 about the BI tool log-in credentials to check if the first user is authorized to access the BI tool. Upon successful authentication of the first user, the system 102 may allow the first user to use the BI tool for configuring and customizing various visual indicators. In an example, the first user may be associated with an organization. The first user may configure and customize the visual indicators for future use by the organization in various analytical reports associated with the organization. The customized visual indicators along with attributes associated with each of the customized visual indicators may be stored in the BI tool server. The attributes may be stored as the third set of attributes previously explained with reference to FIG. 1. Examples of the third set of attributes may include, but are not limited to, the user ID of the first user who has configured and customized the visual indicator, a name of the organization of the first user, an ID of the visual indicator, a type of the visual indicator, an x-axis field of the visual indicator, a y-axis field of the visual indicator, and a BI tool ID of the BI tool that is used to configure and customize the visual indicator.

Once the visual indicators are created and customized, users of the organization may access the system to update one or more analytic reports. In an example, the system 102 may receive a report generating application log-in request from a user, say, the second user for logging into the report generating application installed in the system 102. The report generating application log-in request may include report generating application log-in credentials, such as a user ID and a password, entered by the second user. The system 102 may query the report generating application server 106 about the report generating application log-in credentials to check if the second user is authorized to access the report generating application. Upon successful authentication of the second user, the system 102 may allow the second user to use the report generating application for finalizing the analytical report and generating a final analytical report. In an example, the first user and the second user may be associated with same organization. In an example, the first user may be same as the second user. In another example, the first user may be different than the second user.

Although, for brevity, only a single system 102, has been illustrated for accessing both the BI tool and the report generating application, it would be understood by a person skilled in the art that the BI tool and the report generating application may also be accessed separately through separate systems by same or different users. Further, although the BI tool and the report generating application have been explained to be logged in separately by the users, in an example, the BI tool may be embedded within the report generating application and a user may use a single sign-on (SSO) to access the report generating application having the BI tool embedded therein. In case of SSO, different users may be authorized to access different options within the report generating application and the BI tool. For example, one user may only be allowed to read the visual indicators and use the visual indicators in the analytical report, while another user may be allowed to customize the visual indicators and also use the visual indicators in the analytical report.

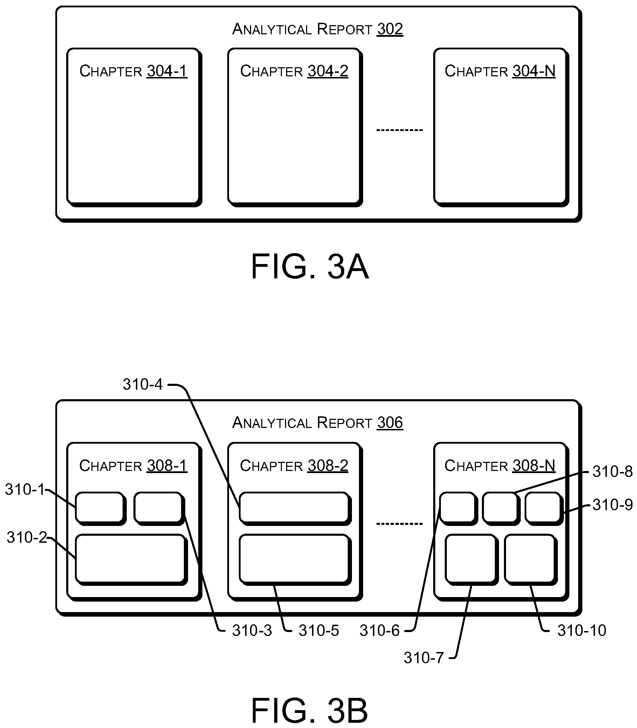

In an example, upon successful authentication, the data acquisition module 114 of the system 102 may obtain an analytical report that the second user wishes to customize. In an example, the analytical report may be pre-stored in the report generating application server 106. For obtaining the analytical report, the system 102 may transmit a request to the report generating application server 106. In another example, the user may provide the analytical report to the data acquisition module 114. The analytical report may have analytical data associated with the organization with which the second user is associated. In an example, the analytical report may comprise one or more chapters with each of the one or more chapters comprising at least a subset of the analytical data. For the sake of brevity, the one or more chapters may hereinafter be collectively referred to as the chapters and individually as chapter. An exemplary analytical report 302 having one or more chapters 304-1, 304-2, ... 304-N, has been illustrated in FIG. 3A. Here, N may be greater than or equal to 1. In an example, the analytical report and the chapters may be pre-created by a user using the report generating application. The analytical data may be raw data that is desired to be graphically represented through one of more visual indicators in the analytical report.

Once the analytical report is obtained, the second user may instruct the system 102 to customize the analytical report by including various visual indicators in the different chapters of the analytical report. In an example, the visual indicator allocation module 116 of the system 102 may implement a visual indicator allocation model for identifying visual indicators that may be included in the different chapters of the analytical report.

In an example, the visual indicator allocation model may be pre-trained based on statistical analysis of at least one historical analytical report. The at least one historical analytical report may, hereinafter, be alternatively referred to as the historical analytical report. The historical analytical report may be a final analytical report historically generated and used by the organization. During training of the visual indicator allocation model, the visual indicator allocation module 116 may obtain the historical analytical report. In an example, the historical analytical report may be obtained from the memory 232 of the system 102. The historical analytical report may be received from the report generating application and may be pre-stored in the memory 232. In another example, the historical analytical report may be directly obtained from the report generating application. The historical analytical report may comprise one or more pre-defined chapters having historical analytical data. Each of the one or more pre-defined chapters may comprise at least one assigned visual indicator graphically representing the historical analytical data.

Subsequently, for each of the at least one historical analytical report, the visual indicator allocation module 116 may identify a first set of historical attributes corresponding to each of the historical analytical report. Further, for each historical analytical report, the visual indicator allocation module 116 may identify a second set of historical attributes corresponding to each of the one or more pre-defined chapters. Further, for each historical analytical report, the visual indicator allocation module 116 may identify a third set of historical attributes corresponding to each of the at least one assigned visual indicator. The visual indicator allocation module 116 may identify the first set of historical attributes, the second set of historical attributes, and the third set of historical attributes based on various attributes or information available at the report generating application server 106 about the historical analytical report, the one or more pre-defined chapters, and the at least one assigned visual indicator. The visual indicator allocation model may be trained on the first set of historical attributes, the second set of historical attributes, and the third set of historical attributes to understand a relationship between the chapters, the visual indicators, and the historical analytical report.

In an example, during real-time operation, for identifying the visual indicators that may be included in the different chapters of the analytical report, the visual indicator allocation module 116 may implement the visual indicator allocation model to identify a first set of attributes corresponding to the analytical report and a second set of attributes corresponding to each chapter. The visual indicator allocation module 116 may identify the first set of attributes corresponding to the analytical report from amongst various attributes or information available about the analytical report at the report generating application server 106. The visual indicator allocation module 116 may further identify the second set of attributes corresponding to each chapter from amongst various attributes or information available about the one of more chapters at the report generating application server 106.

The first set of attributes and the second set of attributes may be attributes that are relevant for the purpose of automated assignment of visual indicators to each chapter of the analytical report. The visual indicator allocation model may be trained, based on statistical analysis of the one or more historical analytical reports, to identify the attributes that are relevant for the purpose of automated assignment of visual indicators to each chapter of the analytical report. In an example, the first set of attributes and the second set of attributes may be stored in the memory 232 of the system 102 or in an external memory of an external system. The first set of attributes and the second set of attributes may be obtained from the memory 232 or the external memory for analysis while determining the visual indicators for incorporation in the chapters of the analytical report.

In an example, the first set of attributes may comprise an organization attribute corresponding to the organization, a user attribute corresponding to a user associated with the organization and using a particular report generating application to finalize the analytical report, and an application attribute corresponding to the particular report generating application. Examples of the second set of attributes corresponding to a particular chapter of the chapters may include, but are not limited to, an ID, a name, a type, and a description of the particular chapter.

Once at least the first set of attributes are identified, the visual indicator allocation module 116 of the system 102 may analyze the organization attribute and a third set of attributes to identify a first plurality of pre-defined visual indicators allocated to the organization. The third set of attributes may be defined as attributes corresponding to a stock of visual indicators stored in the BI tool server 104. The stock of visual indicators may include visual indicators customized for various organizations. In an example, the third set of attributes of a particular visual indicator may include an ID of the organization associated with the user who customized the particular visual indicator. The visual indicator allocation module 116 may thus retrieve an organization ID from the organization attribute and may identify visual indicators, from amongst the stock visual indicators, associated with the same organization ID as the organization ID retrieved from the organization attribute of the second user. In one example, the organization ID may be a part of the third set of attributes of the identified visual indicators. The visual indicator allocation module 116 may thus identify the first plurality of pre-defined visual indicators allocated to the organization based on the organization ID.

The visual indicator allocation module 116 may subsequently analyze the user attribute and the third set of attributes to identify a second plurality of pre-defined visual indicators, from amongst the first plurality of pre-defined visual indicators, allocated to the user for being used in an analytical report associated with the organization. In an example, the visual indicator allocation module 116 may analyze the user attribute and the third set of attributes corresponding to the first plurality of pre-defined visual indicators to identify the second plurality of pre-defined visual indicators. In an example, the third set of attributes of a particular visual indicator may include an ID of at least one user who is granted a permission to access the particular visual indicator. The visual indicator allocation module 116 may retrieve a user ID from the user attribute. The visual indicator allocation module 116 may then identify certain visual indicators, from amongst the first plurality of pre-defined visual indicators, to be a part of the second plurality of pre-defined visual indicators based on a determination that the ID of the at least one user in the third set of attributes of the certain visual indicators is same as the user ID retrieved from the user attribute.

The visual indicator allocation module 116 may further analyze the application attribute and the third set of attributes to identify a set of visual indicators, from amongst the second plurality of pre-defined visual indicators, allocated to the user for being used in the analytical report with the report generating application. In an example, the visual indicator allocation module 116 may analyze the application attribute and the third set of attributes corresponding to the second plurality of pre-defined visual indicators to identify the set of visual indicators. In an example, the third set of attributes of a particular visual indicator may include an ID of at least one report generating application which has a permission to access the particular visual indicator. The visual indicator allocation module 116 may retrieve a report generating application ID from the application attribute. The visual indicator allocation module 116 may then compare, for each of the second plurality of pre-defined visual indicators, the ID of the at least one report generating application in the third set of attributes with the report generating application ID retrieved from the application attribute. The visual indicators having the same ID of the at least one report generating application as the report generating application ID retrieved from the application attribute may be selected to be a part of the set of visual indicators.

Thus, as explained, the visual indicator allocation module 116 may implement the visual indicator allocation model to analyze the first set of attributes, such as the organization attribute, the user attribute, and the application attribute, to identify the set of visual indicators associated with the analytical report.

The visual indicator allocation module 116 may subsequently determine, for each chapter, at least one visual indicator for representing the subset of the analytical data within the chapter. In one example, the at least one visual indicator may be determined based on an association mapping between the first set of attributes, the second set of attributes, and the third set of attributes. In another example, the at least one visual indicator may be determined based on a probability score associated with each visual indicator of the set of visual indicators. The probability score may indicate a probability of the visual indicator occurring in the chapter of the analytical report.

In an example, the visual indicator allocation module 116 may implement the visual indicator allocation model to generate the association mapping and to compute the probability score. As previously described, the visual indicator allocation model may be trained based on statistical analysis of the one or more historical analytical reports. In an example, the visual indicator allocation module 116 may analyze the first set of historical attributes, the second set of historical attributes, and the third set of historical attributes. Based on the analysis of the first set of historical attributes, the second set of historical attributes, and the third set of historical attributes, the visual indicator allocation module 116 may compute the probability score or generate the association mapping between the first set of attributes, the second set of attributes, and the third set of attributes corresponding to each of the set of visual indicators. The association mapping may indicate a relationship between the chapters, the visual indicators, and the analytical report. For example, the association mapping may link a particular visual indicator with a particular user, a particular analytical report type, a particular chapter, a particular organization, and a particular report generating application based on a determination that the particular visual indicator has been historically used by the particular user of the particular organization in the particular chapter of an analytical report of the particular analytical report type while generating the analytical report with the particular report generating application. In an example, the visual indicator allocation module 116 may implement the visual indicator allocation model to generate the association mapping as explained. The association mapping may be stored in the memory 232 of the system 102 or in the external memory.

When using the association mapping in real time for determining the at least one visual indicator, the visual indicator allocation module 116 may receive the association mapping between the first set of attributes, the second set of attributes, and the third set of attributes corresponding to each visual indicator of the set of visual indicators. In an example, the association mapping may be obtained from the memory 232 of the system 102. In another example, the association mapping may be obtained from the external memory.

In an example, for each chapter, the visual indicator allocation module 116 may analyze the association mapping to determine the at least one visual indicator for representing the subset of the analytical data within the chapter. The visual indicator allocation module 116 may determine the at least one visual indicator from amongst the set of visual indicators. For the sake of brevity, the at least one visual indicator may hereinafter alternatively be referred to as the determined visual indicator.

When using the probability score for determining the at least one visual indicator, in an example, the visual indicator allocation module 116 may analyze the first set of attributes, the second set of attributes, and the third set of attributes corresponding to each visual indicator of the set of visual indicators to compute, for each visual indicator, the probability score. The visual indicator allocation model may leverage regression algorithms such as random forest, linear regression, Naïve Bayesian, etc., for determining the probability score.

In one example, to compute the probability score, the visual indicator allocation module 116 may receive an input from a user to assign a pre-assigned weighted score to each attribute in the first set of attributes, the second set of attributes, and the third set of attributes corresponding to each visual indicator of the set of visual indicators. The pre-assigned weighted score may indicate comparative weightage of the attribute for computing the probability score. For example, based on the input received from the user, the user attribute may be assigned a weighted score of 0.3, the application attribute may be assigned a weighted score of 0.1, the organization attribute may be assigned a weighted score of 0.2, the second set of attributes may be assigned a weighted score of 0.2, and the third set of attributes may be assigned a weighted score of 0.2. In other examples, the weighted score for each attribute may vary depending on various factors, such as the user inputs.

In another example, to compute the probability score, the visual indicator allocation module 116 may implement the visual indicator allocation model to determine the pre-assigned weighted score for each attribute of the first set of attributes, the second set of attributes, and the third set of attributes. The visual indicator allocation model may automatically determine the pre-assigned weighted score without a need for an input from the user. For example, the visual indicator allocation model may determine that assigning a highest weighted score to the user attribute than the remaining attributes leads to generation of an analytical report that is least modified by the user. Accordingly, the visual indicator allocation model may assign a highest weighted score to the user attribute.

Subsequently, the visual indicator allocation module 116 may process the first set of attributes, the second set of attributes, the third set of attributes, and the pre-assigned weighted score corresponding to each attribute of the first set of attributes, the second set of attributes, and the third set of attributes, to compute the probability score for each visual indicator. Thus, the probability score may depend on the relevance of the attributes for the user. The relevance may either be determined based on the user of the input or may be automatically determined by the visual indicator allocation model without the input from the user. For example, if it is determined that the user mostly wants to use the visual indicators that are typically used by the user, the user attribute may be assigned the highest weighted score as compared to the remaining attributes. Similarly, if it is determined that the user mostly wants to use the visual indicators that are typically used in the particular chapter of the analytical report, the second set of the attributes may be assigned the highest weighted score.

Once probability scores for each of the set of visual indicators are computed, for each chapter, the visual indicator allocation module 116 may identify the at least one visual indicator, from amongst the set of visual indicators, for representing the subset of the analytical data within the chapter based on the probability scores. The probability score of the determined visual indicator may satisfy a pre-determined selection criterion. In an example, the pre-determined selection criterion may require the probability score of the at least one visual indicator to be greater than a threshold probability score. The threshold probability score may be pre-determined and pre-stored in the memory 232 of the system or the external memory. In another example, the pre-determined selection criterion may require the probability score of the at least one visual indicator to be equal to a maximum probability score. The maximum probability score may have a maximum value of the probability score from amongst the probability scores computed for each of the visual indicators of the set of visual indicators.

In an example, to identify the at least one visual indicator, for each visual indicator, the visual indicator allocation module 116 may compare the probability score of the visual indicator with the threshold probability score. In an example, the threshold probability score may be automatically pre-determined by the visual indicator allocation model without an input from the user. In another example, the threshold probability score may be manually assigned by the user. Subsequently, if the probability score of the visual indicator is greater than the threshold probability score, the visual indicator allocation module 116 may ascertain the visual indicator as the at least one visual indicator for representing the subset of the analytical data in the chapter. In case the probability score of the visual indicator is not greater than the threshold probability score, the visual indicator may not be ascertained as the at least one visual indicator.

In another example, to identify the at least one visual indicator, the visual indicator allocation module 116 may process the probability score for each visual indicator of the set of visual indicators to identify a maximum probability score. The maximum probability score may have a maximum value from amongst the probability scores computed for each of the visual indicators of the set of visual indicators. In an example, the maximum probability score may be identified by the visual indicator allocation model. Subsequently, the visual indicator allocation module 116 may ascertain the visual indicator with the maximum probability score as the at least one visual indicator for representing the subset of the analytical data in the chapter.

In yet another example, to identify the at least one visual indicator, for each chapter, the visual indicator allocation module 116 may rank the visual indicators in descending order of the corresponding probability scores. Subsequently, for each chapter, the visual indicator allocation module 116 may identify a pre-defined number of visual indicators in accordance to the ranking, beginning from the highest rank. The pre-defined number for a chapter may indicate a specific number of visual indicators to be assigned to the chapter. In an example, the pre-defined number may be automatically pre-determined by the visual indicator allocation model without an input from the user and may be pre-stored in the memory of the system or the external memory. In another example, the pre-defined number may be assigned by the user manually. For each chapter, the visual indicator allocation module 116 may assigned the pre-defined number of visual indicators to the chapter of the analytical report.

In an example, for each chapter of the analytical report, the report generation module 118 of the system 102 may incorporate the determined visual indicator into the chapter to generate a final analytical report. The final analytical report may be displayed on a display (not illustrated) of the system 102. An exemplary final analytical report 306 having one or more chapters 308-1, 308-2, ... 308-N that may be generated, has been illustrated in FIG. 3B. Here, N may be greater than or equal to 1. Visual indicators 310-1, 310-2, 310-3, 310-4, 310-5, 310-6, 310-7, 310-8, 310-9, 310-10 have been automatically incorporated to generate the final analytical report.

In an example, the report generation module 118 may display the set of visual indicators on a user interface of the report generating application. In an example, the user interface may be presented on the display of the system 102. In an example, the report generation module 118 may receive an input from the user through the user interface. The input may have instructions to incorporate at least one desired visual indicator from the set of visual indicators in the chapter of the analytical report. The report generation module 118 may incorporate the at least one desired visual indicator in the chapter of the analytical report upon receiving the input from the user.

In another example, the visual indicator allocation module 116 of the system 102 may receive a feedback input from a user. The feedback input may assign at least one desired visual indicator, from amongst the set of visual indicators, to the chapter of the analytical report. The feedback input may, in one example, remove a non-desired visual indicator, from amongst visual indicators assigned to the chapter of the analytical report.

Subsequently, the visual indicator allocation module 116 may identify a fourth set of attributes corresponding to the at least one desired visual indicator or the non-desired visual indicator. The fourth set of attributes may be identified in a similar manner in which the third set of attributes are explained to be identified.

Further, the visual indicator allocation module 116 may analyze the first set of attributes, the second set of attributes corresponding to the chapter, and the fourth set of attributes to improvise the association mapping between the first set of attributes, the second set of attributes, and the third set of attributes. The improvised association mapping may then be used for generating further analytical reports.

In another example, when using the probability score for determining the at least one visual indicator for the chapter, the visual indicator allocation module 116 may receive a feedback input from a user for each attribute of the first set of attributes, the second set of attributes, and the third set of attributes. The feedback input may assign a desired weighted score to the attribute. The visual indicator allocation module 116 may improvise the visual indicator allocation model in accordance with a comparison of the pre-assigned weighted score and the desired weighted score. Further, the visual indicator allocation module 116 may re-train the visual indicator allocation model to optimize the visual indicator allocation model according to the feedback input.

In an example, the visual indicator allocation module 116 may periodically update the pre-assigned weighted score, utilizing the improvised visual indicator allocation model. In another example, the visual indicator allocation module 116 may update the pre-assigned weighted score upon determining that the pre-assigned weighted score and the desired weighted score are different.

FIG. 3A and FIG. 3B illustrates different stages of an analytical report being generated and customized by the system 102, according to an example.

FIG. 3A illustrates an analytical report 302 at an initial stage, according to an example. The analytical report 302 may include one or more chapters 304-1, 304-2, ... 304-N. Here, N may be greater than or equal to 1. The one or more chapters 304-1, 304-2, ... 304-N may be collectively referred to as chapters 304 and individually as chapter 304. The initial stage is a stage where visual indicators are not included in the chapters 304 of the analytical report 302. The analytical report 302 may be obtained by the data acquisition module 114 of the system 102 as explained with reference to FIG. 1 and FIG. 2. In an example, the analytical report 302 and the chapters 304 may be pre-created by a user using the report generating application.

FIG. 3B illustrates a final analytical report 306 at a subsequent stage, according to an example. The final analytical report 306 may include one or more chapters 308-1, 308-2, ... 308-N. Here, N may be greater than or equal to 1. The one or more chapters 308-1, 308-2, ... 308-N may be collectively referred to as chapters 308 and individually as a chapter 308. The subsequent stage is a stage where visual indicators 310-1, 310-2, 310-3, 310-4, 310-5, 310-6, 310-7, 310-8, 310-9, 310-10 are incorporated in the chapters 304 of the final analytical report 306. The final analytical report 306 may be generated by the report generation module 118 of the system 102 as explained with reference to FIG. 1 and FIG. 2. As illustrated, the visual indicators 310-1, 310-2, and 310-3 have been incorporated in the chapter 308-1 of the final analytical report 306. Further, the visual indicators 310-4 and 310-5 have been incorporated in the chapter 308-2 of the final analytical report 306. As illustrated, the visual indicators 310-6, 310-7, 310-8, 310-9, and 310-10 have been incorporated in the chapter 308-N of the final analytical report 306. The number of the visual indicators 310 allocated to one chapter 308 may be equal to or greater than 1.

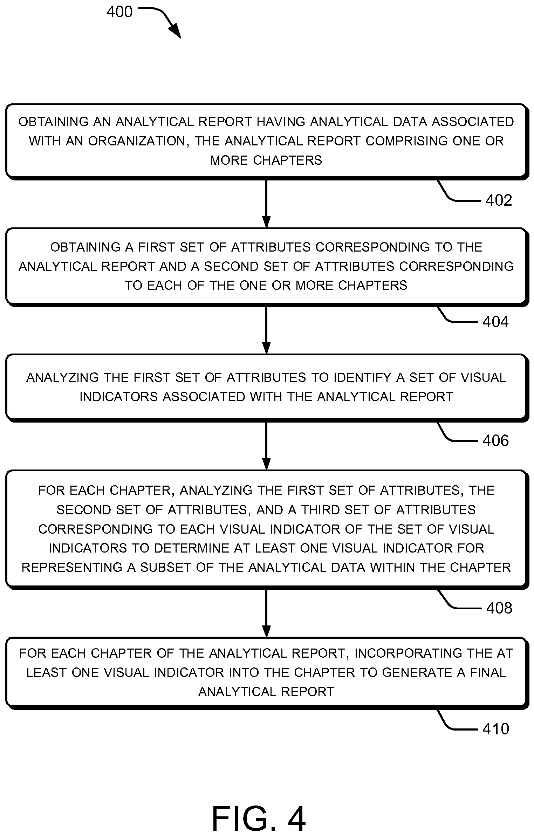

FIG. 4, FIG. 5A to FIG. 5C, FIG. 6A to 6D, and FIG. 7A and FIG. 7B illustrate example methods 400, 500, 600, and 700, respectively, for generating an analytical report. The order in which the methods are described is not intended to be construed as a limitation, and any number of the described method blocks may be combined in any order to implement the methods, or an alternative method. Further, the methods 400, 500, 600, and 700 may be implemented by processing resource or computing device(s) through any suitable hardware, non-transitory machine-readable instructions, or combination thereof.

It may also be understood that methods 400, 500, 600, and 700 may be performed by programmed computing devices, such as the system 102, as depicted in FIG. 1 and FIG. 2. Furthermore, the methods 400, 500, 600, and 700 may be executed based on instructions stored in a non-transitory computer-readable medium, as will be readily understood. The non-transitory computer-readable medium may include, for example, digital memories, magnetic storage media, such as one or more magnetic disks and magnetic tapes, hard drives, or optically readable digital data storage media. While the methods 400, 500, 600, and 700 are described below with reference to the system 102 as described above; other suitable systems for the execution of these methods may also be utilized. Additionally, implementation of these methods is not limited to such examples.

FIG. 4 illustrates the method 400 for generating an analytical report, according to an example.

At block 402, an analytical report may be obtained. The analytical report may have analytical data associated with an organization. In an example, the analytical report may comprise one or more chapters with each of the one or more chapters comprising at least a subset of the analytical data. In an example, the analytical report may be same as the analytical report explained with reference to FIG. 1 and FIG. 2. In an example, the analytical report may be obtained by the data acquisition module 114 in a similar manner as explained with reference to FIG. 1 and FIG. 2.

At block 404, a first set of attributes corresponding to the analytical report may be obtained. Further, a second set of attributes corresponding to each of the one or more chapters may be obtained. In an example, the first set of attributes and the second set of attributes may be same as the first set of attributes and the second set of attributes explained with reference to FIG. 1 and FIG. 2. The first set of attributes and the second set of attributes may be obtained by the visual indicator allocation module 116 explained with reference to FIG. 1 and FIG. 2. The first set of attributes and the second set of attributes may be identified by the visual indicator allocation module 116 in a similar manner as explained with reference to FIG. 1 and FIG. 2. In an example, the first set of attributes and the second set of attributes, identified by the visual indicator allocation module 116, may be stored in a memory of a system, such as the memory 232 of the system 102. Thus, the first set of attributes and the second set of attributes may be obtained from the memory of the system. In another example, the first set of attributes and the second set of attributes, identified by the visual indicator allocation module 116, may be stored in an external memory. Thus, the first set of attributes and the second set of attributes may be obtained from the external memory.

At block 406, the first set of attributes may be analyzed to identify a set of visual indicators associated with the analytical report. The first set of attributes may be analyzed by visual indicator allocation module 116 in a similar manner as explained with reference to FIG. 1 and FIG. 2.

At block 408, for each chapter of the analytical report, the first set of attributes, the second set of attributes, and a third set of attributes corresponding to each visual indicator of the set of visual indicators may be analyzed to determine at least one visual indicator for representing the subset of the analytical data within the chapter. In an example, the first set of attributes, the second set of attributes, and the third set of attributes may be analyzed by the visual indicator allocation module 116 in a similar manner as explained with reference to FIG. 1 and FIG. 2.

In one example, the at least one visual indicator may be determined based on an association mapping. The determination of the at least one visual indicator based on the association mapping has been illustrated and explained with reference to FIG. 1, FIG. 2, and FIG. 5A to FIG. 5C.

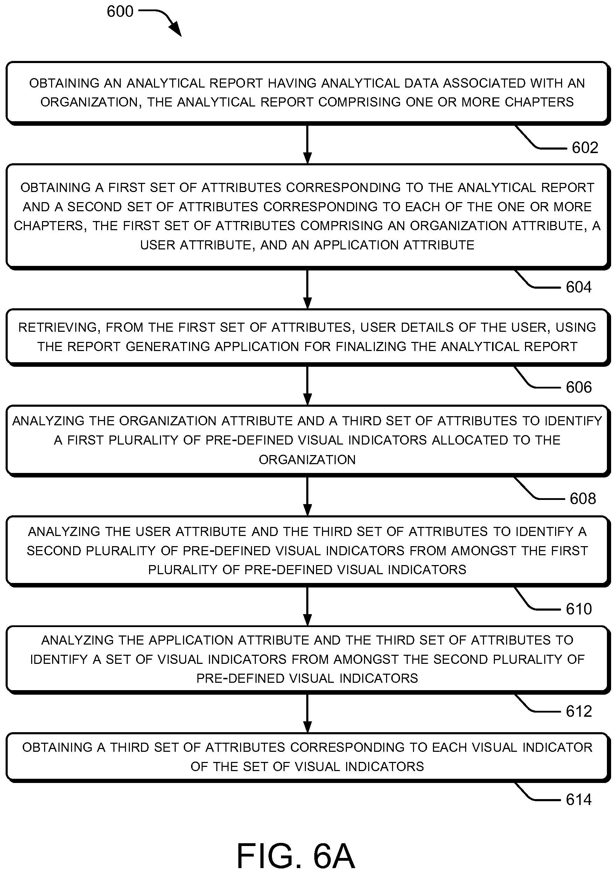

In another example, the at least one visual indicator may be determined based on probability scores associated with each visual indicator of the set of visual indicators. The determination of the at least one visual indicator based on the probability scores has been illustrated and explained in detail with reference to FIG. 6A to FIG. 6D.

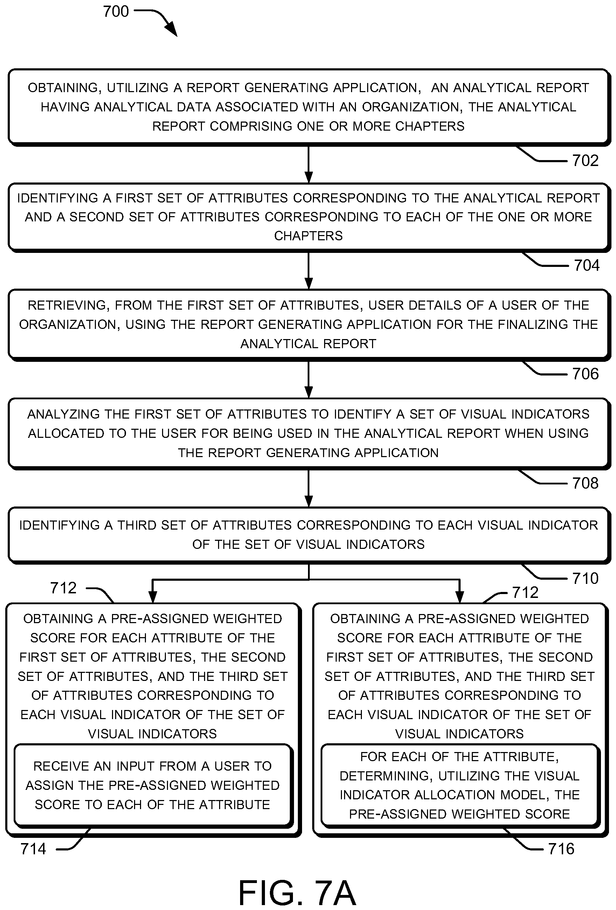

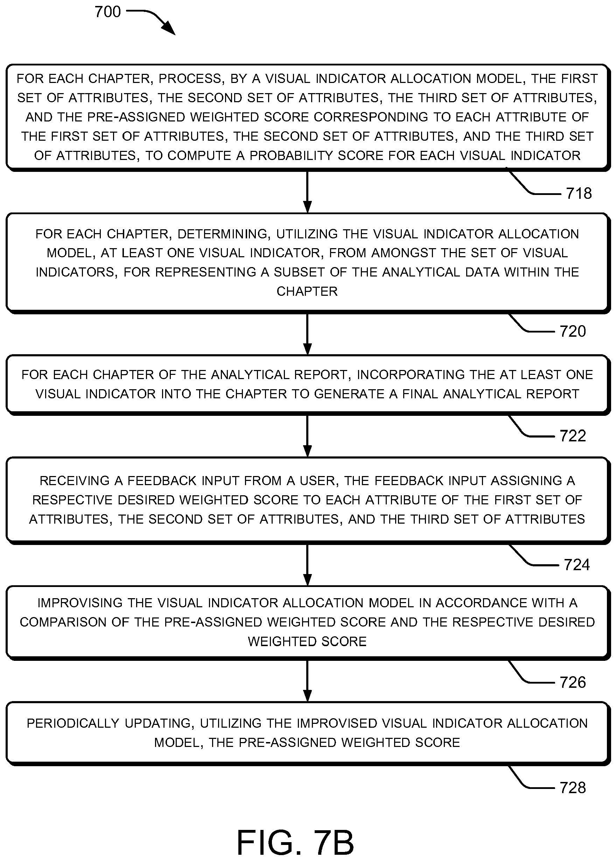

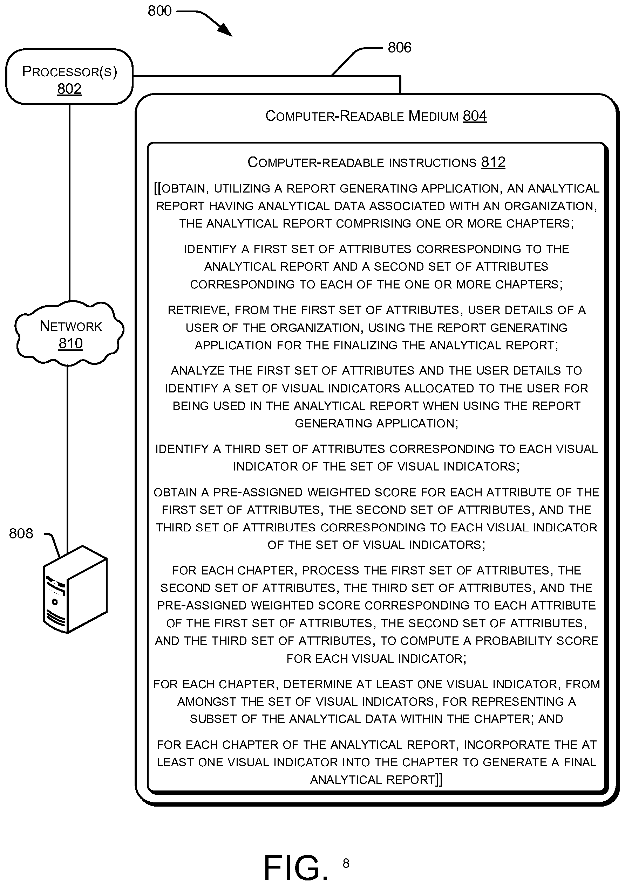

In another example, the at least one visual indicator may be determined based on the weightage scores associated with each attribute of the first set of attributes, the second set of attributes, and the third set of attributes, and probability scores associated with each visual indicator of the set of visual indicators. The determination of the at least one visual indicator based on the weightage scores and the probability scores has been illustrated and explained in detail with reference to FIG. 7A, FIG. 7B, and FIG. 8.

At block 410, for each chapter of the analytical report, the at least one visual indicator may be incorporated into the chapter to generate a final analytical report. In an example, the at least one visual indicator may be incorporated by the report generation module 118 in a similar manner as explained with reference to FIG. 1 and FIG. 2.

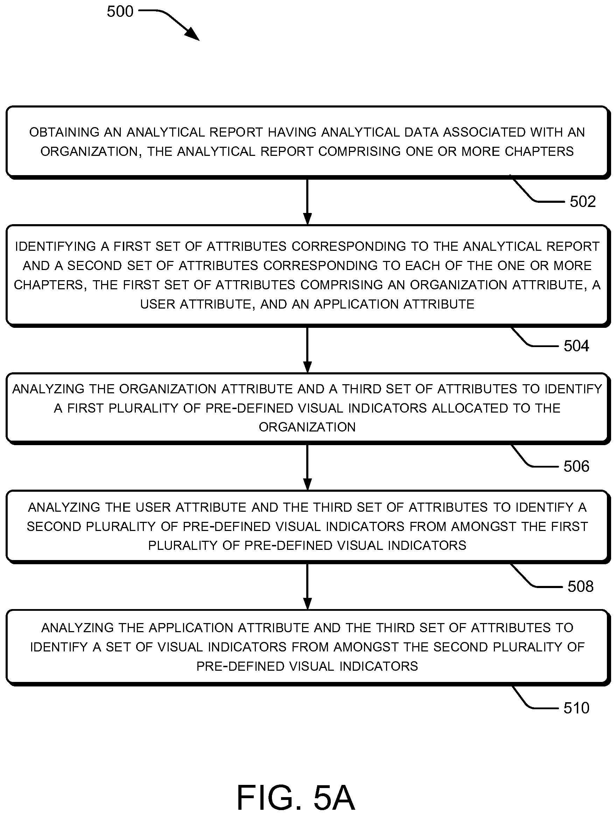

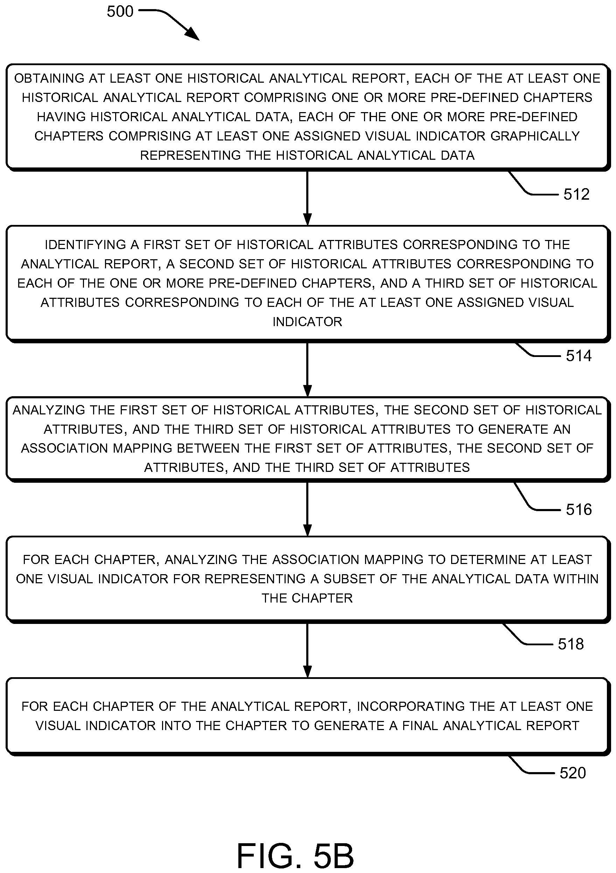

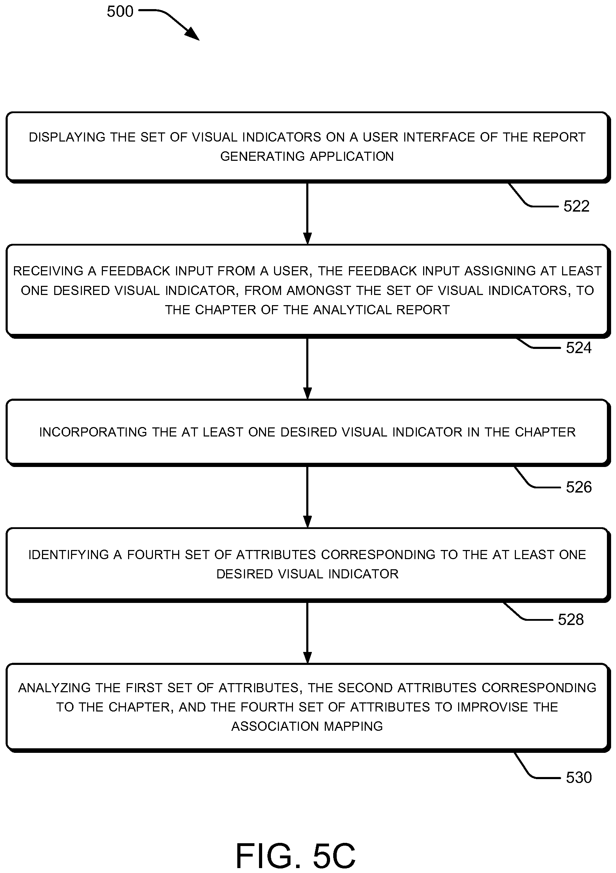

FIG. 5A, FIG. 5B, and FIG. 5C illustrate the method 500 for generating an analytical report based on an association mapping between various attributes related to the analytical report, according to an example.

At block 502, an analytical report may be obtained. The analytical report may have analytical data associated with an organization. The analytical report may comprise one or more chapters. Each of the one or more chapters may comprise at least a subset of the analytical data. In an example, the analytical report may be same as the analytical report explained with reference to FIG. 1 and FIG. 2. In an example, the analytical report may be obtained by the data acquisition module 114 in a similar manner as explained with reference to FIG. 1 and FIG. 2.

At block 504, a first set of attributes corresponding to the analytical report and a second set of attributes corresponding to each of the one or more chapters may be identified. The first set of attributes may comprise an organization attribute corresponding to the organization, a user attribute corresponding to a user associated with the organization and using a particular report generating application to finalize the analytical report, and an application attribute corresponding to the particular report generating application. The first set of attributes and the second set of attributes may be identified by the visual indicator allocation module 116 in a similar manner as explained with reference to FIG. 1 and FIG. 2.

At block 506, the organization attribute and a third set of attributes may be analyzed to identify a first plurality of pre-defined visual indicators allocated to the organization. The first plurality of pre-defined visual indicators may be customized for being used by the organization. The organization attribute and the third set of attributes may be analyzed by the visual indicator allocation module 116 in a similar manner as explained with reference to FIG. 2.

At block 508, the user attribute and the third set of attributes may be analyzed to identify a second plurality of pre-defined visual indicators from amongst the first plurality of pre-defined visual indicators. The second plurality of pre-defined visual indicators may be allocated to the user for being used in an analytical report associated with the organization. The user attribute and the third set of attributes may be analyzed by the visual indicator allocation module 116 in a similar manner as explained with reference to FIG. 2.

At block 510, the application attribute and the third set of attributes may be analyzed to identify a set of visual indicators from amongst the second plurality of pre-defined visual indicators. The set of visual indicators may be allocated to the user for being used in the analytical report with the report generating application. The application attribute and the third set of attributes may be analyzed by the visual indicator allocation module 116 in a similar manner as explained with reference to FIG. 2.

At block 512, at least one historical analytical report may be obtained. Each of the at least one historical analytical report may comprise one or more pre-defined chapters having historical analytical data. Each of the one or more pre-defined chapters may comprise at least one assigned visual indicator graphically representing the historical analytical data. The at least one historical analytical report may be same as the at least one historical analytical report explained with reference to FIG. 2. In an example, the at least one historical analytical report may be obtained by the visual indicator allocation module 116 in a similar manner as explained with reference to FIG. 2.

At block 514, for each of the at least one historical analytical report, a first set of historical attributes corresponding to the historical analytical report, a second set of historical attributes corresponding to each of the one or more pre-defined chapters, and a third set of historical attributes corresponding to each of the at least one assigned visual indicator may be identified. In an example, the first set of historical attributes, the second set of historical attributes, and the third set of historical attributes may be identified by the visual indicator allocation module 116 in a similar manner as explained with reference to FIG. 2.

At block 516, the first set of historical attributes, the second set of historical attributes, and the third set of historical attributes may be analyzed to generate the association mapping between the first set of attributes, the second set of attributes, and the third set of attributes. In an example, the first set of historical attributes, the second set of historical attributes, and the third set of historical attributes may be analyzed by the visual indicator allocation module 116 in a similar manner as explained with reference to FIG. 2.

At block 518, for each chapter, the association mapping may be analyzed to determine at least one visual indicator for representing the subset of the analytical data within the chapter. In an example, the association mapping may be analyzed by the visual indicator allocation module 116 in a similar manner as explained with reference to FIG. 1 and FIG. 2.

At block 520, for each chapter of the analytical report, the at least one visual indicator may be incorporated into the chapter to generate a final analytical report. In an example, the at least one visual indicator may be incorporated and the final analytical report may be generated by the report generation module 118 in a similar manner as explained with reference to FIG. 1 and FIG. 2.

At block 522, the set of visual indicators may be displayed on a user interface of the report generating application. In an example, the set of visual indicators may be displayed by the report generation module 118 in a similar manner as explained with reference to FIG. 2.

At block 524, a feedback input may be received from a user. The feedback input may assign at least one desired visual indicator, from amongst the set of visual indicators, to the chapter of the analytical report. The feedback input may, in one example, remove a non-desired visual indicator, from amongst visual indicators assigned to the chapter of the analytical report. In an example, the feedback input may be received by the visual indicator allocation module 116 in a similar manner as explained with reference to FIG. 2.

At block 526, the at least one desired visual indicator may be incorporated in the chapter of the analytical report upon receiving the feedback input. In an example, the at least one desired visual indicator may be incorporated in the chapter by the visual indicator allocation module 116 in a similar manner as explained with reference to FIG. 2.

At block 528, a fourth set of attributes corresponding to the at least one desired visual indicator or the non-desired visual indicator may be identified. In an example, the fourth set of attributes may be identified by the visual indicator allocation module 116 in a similar manner as explained with reference to FIG. 2.

At block 530, the first set of attributes, the second set of attributes corresponding to the chapter, and the fourth set of attributes may be analyzed to improvise the association mapping between the first set of attributes, the second set of attributes, and the third set of attributes. In an example, the first set of attributes, the second set of attributes corresponding to the chapter, and the fourth set of attributes may be analyzed by the visual indicator allocation module 116 in a similar manner as explained with reference to FIG. 2.

FIG. 6A to FIG. 6D illustrate the method 600 for generating an analytical report based on probability scores associated with various visual indicators that are available for incorporation in the analytical report, according to an example.

At block 602, an analytical report may be obtained. The analytical report may have analytical data associated with an organization. The analytical report may comprise one or more chapters. Each of the one or more chapters may comprise at least a subset of the analytical data. In an example, the analytical report may be same as the analytical report explained with reference to FIG. 1 and FIG. 2. In an example, the analytical report may be obtained by the data acquisition module 114 in a similar manner as explained with reference to FIG. 1 and FIG. 2.

At block 604, a first set of attributes corresponding to the analytical report may be obtained. Further, a second set of attributes corresponding to each of the one or more chapters may be obtained. The first set of attributes may comprise an organization attribute corresponding to the organization, a user attribute corresponding to a user associated with the organization and using a particular report generating application to finalize the analytical report, and an application attribute corresponding to the particular report generating application. In an example, the first set of attributes and the second set of attributes may be same as the first set of attributes and the second set of attributes explained with reference to FIG. 1 and FIG. 2. The first set of attributes and the second set of attributes may be obtained by the visual indicator allocation module 116 implementing a visual indicator allocation model explained with reference to FIG. 1 and FIG. 2. The visual indicator allocation model may be trained based on statistical analysis of one or more historical analytical reports. The first set of attributes and the second set of attributes may be identified by the visual indicator allocation module 116 in a similar manner as explained with reference to FIG. 1 and FIG. 2. In an example, the first set of attributes and the second set of attributes, identified by the visual indicator allocation module 116, may be stored in a memory of a system, such as the memory 232 of the system 102. Thus, the first set of attributes and the second set of attributes may be obtained from the memory of the system. In another example, the first set of attributes and the second set of attributes, identified by the visual indicator allocation module 116, may be stored in an external memory. Thus, the first set of attributes and the second set of attributes may be obtained from the external memory.

At block 606, user details of a user of the organization, using the report generating application for finalizing the analytical report, may be retrieved from the first set of attributes. In an example, the user details may be retrieved by the visual indicator allocation module 116 explained with reference to FIG. 1 and FIG. 2. Examples of the user details may include, but are not limited to, an ID associated with the user, a name of the user, a name of the organization with which the user is associated, and a department of the organization in which the user works. In an example, the user details may be similar to the user attribute explained with reference to FIG. 1 and FIG. 2.

At block 608, the organization attribute and a third set of attributes may be analyzed to identify a first plurality of pre-defined visual indicators allocated to the organization. The first plurality of pre-defined visual indicators may be customized for being used by the organization. The organization attribute and the third set of attributes may be analyzed by the visual indicator allocation module 116 in a similar manner as explained with reference to FIG. 2.

At block 610, the user attribute and the third set of attributes may be analyzed to identify a second plurality of pre-defined visual indicators from amongst the first plurality of pre-defined visual indicators. The second plurality of pre-defined visual indicators may be allocated to the user for being used in an analytical report associated with the organization. The user attribute and the third set of attributes may be analyzed by the visual indicator allocation module 116 in a similar manner as explained with reference to FIG. 2.

At block 612, the application attribute and the third set of attributes may be analyzed to identify a set of visual indicators from amongst the second plurality of pre-defined visual indicators. The set of visual indicators may be allocated to the user for being used in the analytical report with the report generating application. The application attribute and the third set of attributes may be analyzed by the visual indicator allocation module 116 in a similar manner as explained with reference to FIG. 2.

At block 614, the third set of attributes corresponding to each visual indicator of the set of visual indicators may be obtained. In an example, the third set of attributes may be obtained by the visual indicator allocation module 116 explained with reference to FIG. 1 and FIG. 2. Examples of the third set of attributes for the visual indicator may include, but are not limited to, an ID of the visual indicator, a type of the visual indicator, an x-axis field of the visual indicator, a y-axis field of the visual indicator, and a BI tool ID of the BI tool that is used to customize the visual indicator. In an example, the third set of attributes may be identified based on the visual indicator data 210 stored in the BI tool server 104 as explained with reference to FIG. 1 and FIG. 2. The third set of attributes that are identified may be stored in the memory of the system or the external memory. The third set of attributes may accordingly be obtained from the BI tool server 104, the memory of the system, or the external memory.

At block 616, for each chapter, the first set of attributes, the second set of attributes, and the third set of attributes corresponding to each visual indicator of the set of visual indicators may be analyzed to compute, for each visual indicator, a probability score. The probability score may indicate a probability of the visual indicator occurring in the chapter of the analytical report. In an example, the probability score may be computed by the visual indicator allocation module 116 implementing the visual indicator allocation model. The visual indicator allocation model may be trained based on statistical analysis of one or more historical analytical reports to compute the probability score. The visual indicator allocation model may leverage regression algorithms such as random forest, linear regression, Naive Bayesian, etc., for determining the probability score. In an example, the visual indicator allocation model may understand a relationship between the chapters, the visual indicators, and the analytical report based on statistical analysis of the one or more historical analytical reports for computing the probability score.

In an example, to compute, for each visual indicator, the probability score, at block 618, an input may be received from a user to assign a pre-assigned weighted score to each attribute in the first set of attributes, the second set of attributes, and the third set of attributes corresponding to each visual indicator of the set of visual indicators. The pre-assigned weighted score may indicate comparative weightage of the attribute for computing the probability score. For example, based on the input received from the user, the user attribute may be assigned a weighted score of 0.3, the application attribute may be assigned a weighted score of 0.1, the organization attribute may be assigned a weighted score of 0.2, the second set of attributes may be assigned a weighted score of 0.2, and the third set of attributes may be assigned a weighted score of 0.2. In other examples, the weighted score for each attribute may vary depending on various factors, such as the user inputs.

Subsequently, at block 620, the first set of attributes, the second set of attributes, the third set of attributes, and the pre-assigned weighted score corresponding to each attribute of the first set of attributes, the second set of attributes, and the third set of attributes, may be processed to compute the probability score for each visual indicator. Thus, the probability score may depend on the relevance of the attributes for the user. For example, if the user mostly wants to use the visual indicators that are typically used by the user, the user may assign a highest weighted score to the user attribute than the remaining attributes. Similarly, if the user mostly wants to use the visual indicators that are typically used in the particular chapter of the analytical report, the user may assign a highest weighted score to the second set of the attributes.

In another example, to compute, for each visual indicator, the probability score, at block 622, for each attribute of the first set of attributes, the second set of attributes, and the third set of attributes, a pre-assigned weighted score may be determined. The pre-assigned weighted score may indicate comparative weightage of the attribute for computing the probability score. In an example, the pre-assigned weighted score may be determined by the visual indicator allocation module 116 implementing the visual indicator allocation model. The visual indicator allocation model may automatically determine the pre-assigned weighted score without a need for an input from the user. For example, the visual indicator allocation model may determine that assigning a highest weighted score to the user attribute than the remaining attributes leads to generation of an analytical report that is least modified by the user. Accordingly, the visual indicator allocation model may assign a highest weighted score to the user attribute.

Subsequently, at block 624, the first set of attributes, the second set of attributes, the third set of attributes, and the pre-assigned weighted score corresponding to each attribute of the first set of attributes, the second set of attributes, and the third set of attributes, may be processed to compute the probability score for each visual indicator. Thus, the probability score may depend on the relevance of the attributes, automatically determined by the visual indicator allocation model, for the user.

At block 626, for each chapter, at least one visual indicator may be identified, from amongst the set of visual indicators, for representing the subset of the analytical data within the chapter. The probability score of the at least one visual indicator may satisfy a pre-determined selection criterion. In an example, the at least one visual indicator may be identified by the visual indicator allocation module 116. In an example, the pre-determined selection criterion may require the probability score of the at least one visual indicator to be greater than a threshold probability score. The threshold probability score may be pre-determined and pre-stored in the memory of the system or the external memory. In another example, the pre-determined selection criterion may require the probability score of the at least one visual indicator to be equal to a maximum probability score. The maximum probability score may have a maximum value of the probability score from amongst the probability scores computed for each of the visual indicators of the set of visual indicators.

In an example, to identify the at least one visual indicator, at block 628, for each visual indicator, the probability score of the visual indicator may be compared with a threshold probability score. In an example, the threshold probability score may be automatically pre-determined by the visual indicator allocation model without an input from the user. In another example, the threshold probability score may be manually assigned by the user.

Subsequently, at block 630, for the probability score of the visual indicator being greater than the threshold probability score, the visual indicator may be ascertained as the at least one visual indicator for representing the subset of the analytical data in the chapter. In case the probability score of the visual indicator is not greater than the threshold probability score, the visual indicator may not be ascertained as the at least one visual indicator.

In an example, to identify the at least one visual indicator, at block 632, the probability score computed for each visual indicator of the set of visual indicators may be processed to identify a maximum probability score. The maximum probability score may have a maximum value from amongst the probability scores computed for each of the visual indicators of the set of visual indicators. In an example, the maximum probability score may be identified by the visual indicator allocation model.

Subsequently, at block 634, the visual indicator with the maximum probability score may be ascertained as the at least one visual indicator for representing the subset of the analytical data in the chapter.

In another example, to identify the at least one visual indicator, at block 636, for each chapter, the visual indicators may be ranked in descending order of the corresponding probability score.

Subsequently, at block 638, for each chapter, a pre-defined number of visual indicators may be identified in accordance to the ranking, beginning from the highest rank. The pre-defined number for a chapter indicates a specific number of visual indicators to be assigned to the chapter. In an example, the pre-defined number may be automatically pre-determined by the visual indicator allocation model without an input from the user and may be pre-stored in the memory of the system or the external memory. In another example, the pre-defined number may be manually assigned by the user.

Subsequently, at block 640, for each chapter, the pre-defined number of visual indicators may be assigned to the chapter of the analytical report.

At block 642, for each chapter of the analytical report, the at least one visual indicator may be incorporated into the chapter to generate a final analytical report. In an example, the at least one visual indicator may be incorporated and the final analytical report may be generated by the report generation module 118 in a similar manner as explained with reference to FIG. 1 and FIG. 2.

At block 644, the set of visual indicators may be displayed on a user interface of the report generating application. In an example, the set of visual indicators may be displayed by the report generation module 118 in a similar manner as explained with reference to FIG. 2. In an example, the set of visual indicators may be ranked in descending order of the corresponding probability scores. Further, the set of visual indicators may be displayed on the user interface in accordance with the ranking, beginning from the highest rank.

At block 646, at least one user selected visual indicator, from the set of visual indicators, may be incorporated in the chapter of the analytical report. In an example, the at least one user selected visual indicator may be incorporated in the chapter upon receiving an input from the user through the user interface. The input may have instructions to incorporate the at least one user selected visual indicator in the chapter. In an example, the at least one user selected visual indicator may be incorporated in the chapter by the visual indicator allocation module 116 in a similar manner as explained with reference to FIG. 2.

At block 648, a feedback input may be received from a user for each attribute of the first set of attributes, the second set of attributes, and the third set of attributes. The feedback input may assign a desired weighted score to the attribute.

At block 650, the visual indicator allocation model may be improvised in accordance with a comparison of the pre-assigned weighted score and the desired weighted score. In an example, the visual indicator allocation model may re-train to optimize the visual indicator allocation model according to the feedback input.

In an example, at block 652, the pre-assigned weighted score may be periodically updated, utilizing the improvised visual indicator allocation model. In another example, the pre-assigned weighted score may be updated upon determining that the pre-assigned weighted score and the desired weighted score are different.

FIG. 7A and FIG. 7B illustrate the method 700 for generating an analytical report based on weightage scores associated with various attributes related to the analytical report, and probability scores associated with various visual indicators that are available for incorporation in the analytical report, according to an example.

At block 702, an analytical report may be obtained. The analytical report may have analytical data associated with an organization. The analytical report may comprise one or more chapters. Each of the one or more chapters may comprise at least a subset of the analytical data. In an example, the analytical report may be obtained utilizing a report generating application. In an example, the analytical report may be same as the analytical report explained with reference to FIG. 1 and FIG. 2. In an example, the analytical report may be obtained by the data acquisition module 114 in a similar manner as explained with reference to FIG. 1 and FIG. 2.

At block 704, a first set of attributes corresponding to the analytical report may be identified. Further, a second set of attributes corresponding to each of the one or more chapters may be identified. In an example, the first set of attributes and the second set of attributes may be same as the first set of attributes and the second set of attributes explained with reference to FIG. 1 and FIG. 2. The first set of attributes and the second set of attributes may be identified by the visual indicator allocation module 116 in a similar manner as explained with reference to FIG. 1 and FIG. 2.

At block 706, user details of a user of the organization, using the report generating application for finalizing the analytical report, may be retrieved from the first set of attributes. In an example, the user details may be retrieved by the visual indicator allocation module 116 explained with reference to FIG. 1 and FIG. 2. Examples of the user details may include, but are not limited to, an ID associated with the user, a name of the user, a name of the organization with which the user is associated, and a department of the organization in which the user works. In an example, the user details may be similar to the user attribute explained with reference to FIG. 1 and FIG. 2.

At block 708, the first set of attributes and the user details may be analyzed to identify a set of visual indicators. The set of visual indicators may be allocated to the user for being used in the analytical report when using the report generating application. The visual indicators may provide graphical representation of the analytical data present in the analytical report. The set of visual indicators may be identified by the visual indicator allocation module 116 in a similar manner as explained with reference to FIG. 2.

At block 710, a third set of attributes corresponding to each visual indicator of the set of visual indicators may be identified. In an example, the third set of attributes may be identified by the visual indicator allocation module 116 explained with reference to FIG. 1 and FIG. 2. Examples of the third set of attributes for the visual indicator may include, but are not limited to, an ID of the visual indicator, a type of the visual indicator, an x-axis field of the visual indicator, a y-axis field of the visual indicator, and a BI tool ID of the BI tool that is used to customize the visual indicator. In an example, the third set of attributes may be identified based on the visual indicator data 210 stored in the BI tool server 104 as explained with reference to FIG. 1 and FIG. 2.

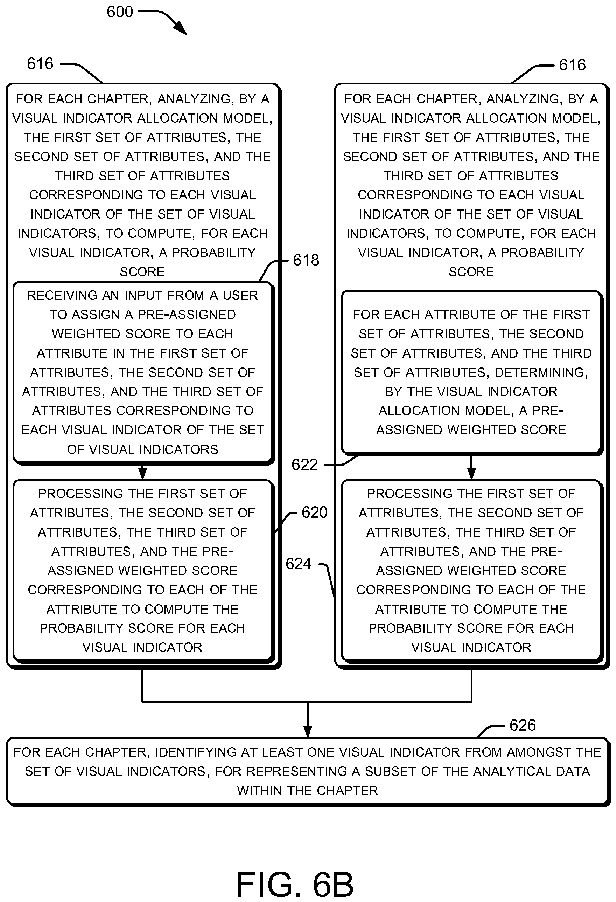

At block 712, a pre-assigned weighted score may be obtained for each attribute of the first set of attributes, the second set of attributes, and the third set of attributes corresponding to each visual indicator of the set of visual indicators. The pre-assigned weighted score may indicate comparative weightage of the attribute for computing the probability score. The pre-assigned weighted score may either be manually assigned by a user or may be automatically determined by the the visual indicator allocation model as explained with reference to blocks 618, 620, 622, and 624 of FIG. 6B.

In an example, at block 714, an input may be received from a user to assign the pre-assigned weighted score to each attribute in the first set of attributes, the second set of attributes, and the third set of attributes corresponding to each visual indicator of the set of visual indicators. For example, based on the input received from the user, the user attribute may be assigned a weighted score of 0.3, the application attribute may be assigned a weighted score of 0.1, the organization attribute may be assigned a weighted score of 0.2, the second set of attributes may be assigned a weighted score of 0.2, and the third set of attributes may be assigned a weighted score of 0.2. In other examples, the weighted score for each attribute may vary depending on various factors, such as the user inputs.

In another example, at block 716, for each attribute of the first set of attributes, the second set of attributes, and the third set of attributes, the pre-assigned weighted score may be determined utilizing the visual indicator allocation model. The visual indicator allocation model may automatically determine the pre-assigned weighted score without a need for an input from the user. For example, the visual indicator allocation model may determine that assigning the highest weighted score to the user attribute than the remaining attributes leads to generation of an analytical report that is least modified by the user. Accordingly, the visual indicator allocation model may assign the highest weighted score to the user attribute.

At block 718, for each chapter, the first set of attributes, the second set of attributes, the third set of attributes, and the pre-assigned weighted score corresponding to each attribute of the first set of attributes, the second set of attributes, and the third set of attributes, may be processed to compute a probability score for each visual indicator. The probability score may indicate a probability of the visual indicator occurring in the chapter of the analytical report. In an example, the probability score may be computed by the visual indicator allocation module 116 implementing the visual indicator allocation model. The visual indicator allocation model may be trained based on statistical analysis of one or more historical analytical reports to compute the probability score. The visual indicator allocation model may leverage regression algorithms such as random forest, linear regression, Naive Bayesian, etc., for determining the probability score. In an example, the visual indicator allocation model may understand a relationship between the chapters, the visual indicators, and the analytical report based on statistical analysis of the one or more historical analytical reports for computing the probability score.

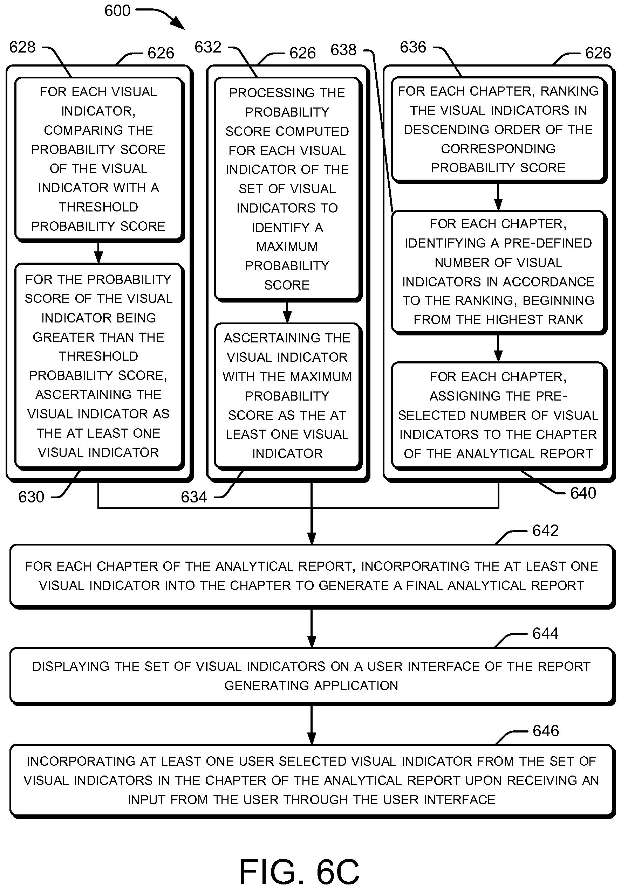

At block 720, for each chapter, at least one visual indicator may be determined, from amongst the set of visual indicators, for representing the subset of the analytical data within the chapter. The probability score of the at least one visual indicator may satisfy a pre-determined selection criterion. In an example, the at least one visual indicator may be determined by the visual indicator allocation module 116. In an example, the pre-determined selection criterion may require the the probability score of the at least one visual indicator to be greater than a threshold probability score. The threshold probability score may be pre-determined and pre-stored in the memory of the system or the external memory. In another example, the pre-determined selection criterion may require the probability score of the at least one visual indicator to be equal to a maximum probability score. The maximum probability score may have a maximum value of the probability score from amongst the probability scores computed for each of the visual indicators of the set of visual indicators. The at least one visual indicator may be determined or identified in a similar manner as explained with reference to blocks 626 to 640 of FIG. 6C.

At block 722, for each chapter of the analytical report, the at least one visual indicator may be incorporated into the chapter to generate a final analytical report. In an example, the at least one visual indicator may be incorporated and the final analytical report may be generated by the report generation module 118 in a similar manner as explained with reference to FIG. 1 and FIG. 2.

At block 724, a feedback input may be received from a user. The feedback input may assign a respective desired weighted score to each attribute of the first set of attributes, the second set of attributes, and the third set of attributes.

At block 726, the visual indicator allocation model may be improvised in accordance with a comparison of the pre-assigned weighted score and the respective desired weighted score. In an example, the visual indicator allocation model may re-train to optimize the visual indicator allocation model according to the feedback input.

In an example, at block 728, the pre-assigned weighted score may be periodically updated, utilizing the improvised visual indicator allocation model. In another example, the pre-assigned weighted score may be updated upon determining that the pre-assigned weighted score and the desired weighted score are different.

FIG. 8 illustrates a computing environment 800 implementing a non-transitory computer-readable medium for generating an analytical report, according to an example. In an example, the computing environment 800 includes processor(s) 802 communicatively coupled to a non-transitory computer-readable medium 804 through a communication link 806. In one example, the communication link 806 may be similar to the network 108, as described in conjunction with the preceding figures. In an example implementation, the computing environment 800 may be for example, the communication environment 100 or the communication environment 200. In an example, the processor(s) 802 may have one or more processing resources for fetching and executing computer-readable instructions from the non-transitory computer-readable medium 804. The processor(s) 802 and the non-transitory computer-readable medium 804 may be implemented, for example, in the system 102 (as has been described in conjunction with the preceding figures).

The non-transitory computer-readable medium 804 may be, for example, an internal memory device or an external memory device. In an example implementation, the communication link 806 may be a network communication link. The processor(s) 802 and the non-transitory computer-readable medium 804 may also be communicatively coupled to one or more servers 808 over a network 810. The one or more servers 808 may be the BI tool server 104 or the report generating application server 106 described in conjunction with FIG. 1 and FIG. 2. The network 810 may similar to the network 108 described in conjunction with FIG. 1 and FIG. 2.

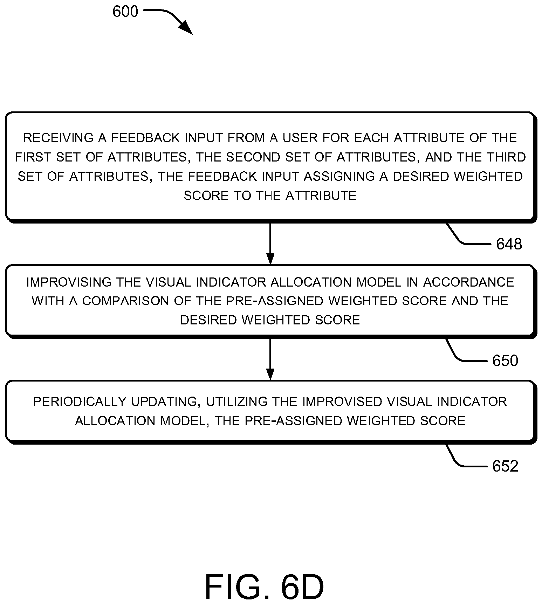

In an example implementation, the non-transitory computer-readable medium 804 may include a set of computer-readable instructions 812 which may be accessed by the processor(s) 802 through the communication link 806. Referring to FIG. 6, in an example, the non-transitory computer-readable medium 804 may include instructions 812 that may cause the processor(s) 802 to obtain, utilizing a report generating application, an analytical report having analytical data associated with an organization. The analytical report may comprise one or more chapters. Each of the one or more chapters may comprise a subset of the analytical data. In an example, the analytical report may be obtained in a similar manner as explained with reference to block 702 of FIG. 7A.

The instructions 812 may further cause the processor(s) 802, in one example, to identify a first set of attributes corresponding to the analytical report and a second set of attributes corresponding to each of the one or more chapters. In an example, the first set of attributes and the second set of attributes may be identified in a similar manner as explained with reference to block 704 of FIG. 7A.

The instructions 812 may further cause the processor(s) 802, in one example, to retrieve, from the first set of attributes, user details of a user of the organization, using the report generating application for finalizing the analytical report. In an example, the user details may be retrieved in a similar manner as explained with reference to block 706 of FIG. 7A.

The instructions 812 may further cause the processor(s) 802, in one example, to analyze the first set of attributes and the user details to identify a set of visual indicators allocated to the user for being used in the analytical report when using the report generating application. The visual indicators may provide graphical representation of the analytical data present in the analytical report. In an example, the first set of attributes and the user details may be analyzed in a similar manner as explained with reference to block 708 of FIG. 7A.

The instructions 812 may further cause the processor(s) 802, in one example, to identify a third set of attributes corresponding to each visual indicator of the set of visual indicators. In an example, the third set of attributes may be identified in a similar manner as explained with reference to block 710 of FIG. 7A.

The instructions 812 may further cause the processor(s) 802, in one example, to obtain a pre-assigned weighted score for each attribute of the first set of attributes, the second set of attributes, and the third set of attributes corresponding to each visual indicator of the set of visual indicators. In an example, the pre-assigned weighted score may be obtained in a similar manner as explained with reference to blocks 712 of FIG. 7A.

In one example, the instructions 812 may further cause the processor(s) 802 to receive an input from a user to assign the pre-assigned weighted score to each attribute in the first set of attributes, the second set of attributes, and the third set of attributes corresponding to each visual indicator of the set of visual indicators. The pre-assigned weighted score may indicate comparative weightage of the attribute for computing the probability score. In an example, the pre-assigned weighted score may be assigned in a similar manner as explained with reference to blocks 714 of FIG. 7A.

In one example, for each attribute of the first set of attributes, the second set of attributes, and the third set of attributes, the instructions 812 may further cause the processor(s) 802 to determine, utilizing the visual indicator allocation model, the pre-assigned weighted score. In an example, the pre-assigned weighted score may be determined in a similar manner as explained with reference to blocks 716 of FIG. 7A.

For each chapter, the instructions 812 may cause the processor(s) 802, in one example, to process, by a visual indicator allocation model, the first set of attributes, the second set of attributes, the third set of attributes, and the pre-assigned weighted score corresponding to each attribute of the first set of attributes, the second set of attributes, and the third set of attributes, to compute a probability score for each visual indicator. The probability score of a visual indicator may indicate a probability of the visual indicator occurring in the chapter of the analytical report. The visual indicator allocation model may be trained based on statistical analysis of one or more historical analytical reports. In an example, the probability score may be computed in a similar manner as explained with reference to blocks 718 of FIG. 7B.

For each chapter, the instructions 812 may further cause the processor(s) 802, in one example, to determine, utilizing the visual indicator allocation model, at least one visual indicator, from amongst the set of visual indicators, for representing the subset of the analytical data within the chapter. The probability score of the at least one visual indicator may satisfy a pre-determined selection criterion. In an example, the at least one visual indicator may be determined in a similar manner as explained with reference to blocks 720 of FIG. 7B.

For each chapter of the analytical report, the instructions 812 may further cause the processor(s) 802, in one example, to incorporate the at least one visual indicator into the chapter to generate a final analytical report. In an example, the at least one visual indicator may be incorporated and the final analytical report may be generated in a similar manner as explained with reference to blocks 722 of FIG. 7B.

In one example, the instructions 812 may further cause the processor(s) 802 to receive a feedback input from a user. The feedback input may assign a respective desired weighted score to each attribute of the first set of attributes, the second set of attributes, and the third set of attributes.

In one example, the instructions 812 may further cause the processor(s) 802 to improvise the visual indicator allocation model in accordance with a comparison of the pre-assigned weighted score and the respective desired weighted score. The visual indicator allocation model may be improvised in a similar manner as explained with reference to blocks 726 of FIG. 7B.

In one example, the instructions 812 may further cause the processor(s) 802 to periodically update, utilizing the improvised visual indicator allocation model, the pre-assigned weighted score. The the pre-assigned weighted score may be updated in a similar manner as explained with reference to blocks 728 of FIG. 7B.

Although examples for the present disclosure have been described in language specific to structural features and/or methods, it is to be understood that the appended claims are not necessarily limited to the specific features or methods described. Rather, the specific features and methods are disclosed and explained as examples of the present disclosure.

## Claims

1. A system (102) comprising:
a data acquisition module (114) to:
obtain an analytical report having analytical data associated with an organization, the analytical report comprising one or more chapters, wherein each of the one or more chapters comprises at least a subset of the analytical data; and
a visual indicator allocation module (116) implementing a visual indicator allocation model to:
identify a first set of attributes corresponding to the analytical report and a second set of attributes corresponding to each of the one or more chapters;
analyze the first set of attributes to identify a set of visual indicators associated with the analytical report, wherein the visual indicators are to provide graphical representation of the analytical data present in the analytical report;
receive an association mapping between the first set of attributes, the second set of attributes, and a third set of attributes corresponding to each visual indicator of the set of visual indicators; and
for each chapter, analyze the association mapping to determine at least one visual indicator for representing the subset of the analytical data within the chapter; and
a report generation module (118) to:
for each chapter of the analytical report, incorporate the at least one visual indicator into the chapter to generate a final analytical report.

2. The system (102) of claim 1, wherein the first set of attributes comprises an organization attribute corresponding to the organization, a user attribute corresponding to a user associated with the organization and using a particular report generating application to finalize the analytical report, and an application attribute corresponding to the particular report generating application.

3. The system (102) of claim 2, wherein the visual indicator allocation module (116) is to:
analyze the organization attribute and the third set of attributes to identify a first plurality of pre-defined visual indicators allocated to the organization, wherein the first plurality of pre-defined visual indicators are customized for being used by the organization;
analyze the user attribute and the third set of attributes to identify a second plurality of pre-defined visual indicators, from amongst the first plurality of pre-defined visual indicators, allocated to the user for being used in an analytical report associated with the organization; and
analyze the application attribute and the third set of attributes to identify the set of visual indicators, from amongst the second plurality of pre-defined visual indicators, allocated to the user for being used in the analytical report with the particular report generating application.

4. The system (102) of claim 1, wherein the visual indicator allocation module (116) is to:
obtain at least one historical analytical report, each of the at least one historical analytical report comprising one or more pre-defined chapters having historical analytical data, wherein each of the one or more pre-defined chapters comprises at least one assigned visual indicator graphically representing the historical analytical data;
for each of the at least one historical analytical report, identify a first set of historical attributes corresponding to the historical analytical report, a second set of historical attributes corresponding to each of the one or more pre-defined chapters, and a third set of historical attributes corresponding to each of the at least one assigned visual indicator; and
analyze the first set of historical attributes, the second set of historical attributes, and the third set of historical attributes to generate the association mapping between the first set of attributes, the second set of attributes, and the third set of attributes.

5. The system (102) of claim 4, wherein the visual indicator allocation module (116) is to:
receive a feedback input from a user, wherein the feedback input is to assign at least one desired visual indicator, from amongst the set of visual indicators, to the chapter of the analytical report;
identify a fourth set of attributes corresponding to the at least one desired visual indicator; and
analyze the first set of attributes, the second set of attributes corresponding to the chapter, and the fourth set of attributes to improvise the association mapping between the first set of attributes, the second set of attributes, and the third set of attributes.

6. The system (102) of claim 2, wherein the report generation module (116) is to:
display the set of visual indicators on a user interface of the particular report generating application; and
incorporate at least one desired visual indicator from the set of visual indicators in the chapter of the analytical report upon receiving an input from the user through the user interface, the input having instructions to incorporate the at least one desired visual indicator in the chapter.

7. A method comprising:
obtaining, by a data acquisition module associated with a report generating application, an analytical report having analytical data associated with an organization, the analytical report comprising one or more chapters, wherein each of the one or more chapters comprises at least a subset of the analytical data;
obtaining, by a visual indicator allocation module implementing a visual indicator allocation model, a first set of attributes corresponding to the analytical report and a second set of attributes corresponding to each of the one or more chapters;
retrieving, by the visual indicator allocation module, from the first set of attributes, user details of a user of the organization, using the report generating application for finalizing the analytical report;
analyzing, by the visual indicator allocation module, the first set of attributes and the user details to identify a set of visual indicators allocated to the user for being used in the analytical report when using the report generating application, wherein the visual indicators are to provide graphical representation of the analytical data present in the analytical report;
obtaining, by the visual indicator allocation module, a third set of attributes corresponding to each visual indicator of the set of visual indicators;
for each chapter, analyzing, by the visual indicator allocation model, the first set of attributes, the second set of attributes, and the third set of attributes corresponding to each visual indicator of the set of visual indicators, to compute, for each visual indicator, a probability score indicating a probability of the visual indicator occurring in the chapter of the analytical report, wherein the visual indicator allocation model is trained based on statistical analysis of one or more historical analytical reports;
for each chapter, identifying, by the visual indicator allocation model, at least one visual indicator from amongst the set of visual indicators, for representing the subset of the analytical data within the chapter, wherein the probability score of the at least one visual indicator satisfies a pre-determined selection criterion; and for each chapter of the analytical report, incorporating, by a report generation module, the at least one visual indicator into the chapter to generate a final analytical report.

8. The method of claim 7, wherein the identifying, by the visual indicator allocation model, at least one visual indicator comprises:
for each visual indicator, comparing the probability score of the visual indicator with a threshold probability score; and
for the probability score of the visual indicator being greater than the threshold probability score, ascertaining the visual indicator as the at least one visual indicator for representing the subset of the analytical data in the chapter.

9. The method of claim 7, wherein the identifying, by the visual indicator allocation model, at least one visual indicator comprises:
processing the probability score computed for each visual indicator of the set of visual indicators to identify a maximum probability score, wherein the maximum probability score has a maximum value from amongst probability scores computed for each of the visual indicators of the set of visual indicators; and
ascertaining the visual indicator with the maximum probability score as the at least one visual indicator for representing the subset of the analytical data in the chapter.

10. The method of claim 7, wherein the identifying, by the visual indicator allocation model, at least one visual indicator comprises:
for each chapter, ranking the visual indicators in descending order of the corresponding probability score;
for each chapter, identifying a pre-defined number of visual indicators in accordance to the ranking, beginning from the highest rank, wherein the pre-defined number for a chapter indicates a specific number of visual indicators to be assigned to the chapter; and
for each chapter, assigning the pre-defined number of visual indicators to the chapter of the analytical report.

11. The method of claim 7, wherein the first set of attributes comprises an organization attribute corresponding to the organization, a user attribute corresponding to the user, and an application attribute corresponding to the report generating application, and wherein the method comprises:
analyzing the organization attribute and the third set of attributes to identify a first plurality of pre-defined visual indicators allocated to the organization, wherein the first plurality of pre-defined visual indicators are customized for being used by the organization;
analyzing the user attribute and the third set of attributes to identify a second plurality of pre-defined visual indicators, from amongst the first plurality of pre-defined visual indicators, allocated to the user for being used in an analytical report associated with the organization; and
analyzing the application attribute and the third set of attributes to identify the set of visual indicators, from amongst the second plurality of pre-defined visual indicators, allocated to the user for being used in the analytical report with the report generating application.

12. The method of claim 11, wherein the method comprises:
ranking the set of visual indicators in descending order of the corresponding probability score;
displaying the set of visual indicators on a user interface of the report generating application in accordance with the ranking, beginning from the highest rank; and
incorporating at least one user selected visual indicator from the set of visual indicators in the chapter of the analytical report upon receiving an input from the user through the user interface, the input having instructions to incorporate the at least one user selected visual indicator in the chapter.

13. The method of claim 7, wherein the compute, for each visual indicator, the probability score comprises:
receiving an input from a user to assign a pre-assigned weighted score to each attribute in the first set of attributes, the second set of attributes, and the third set of attributes corresponding to each visual indicator of the set of visual indicators, the pre-assigned weighted score indicating comparative weightage of the attribute for computing the probability score; and
processing the first set of attributes, the second set of attributes, the third set of attributes, and the pre-assigned weighted score corresponding to each attribute of the first set of attributes, the second set of attributes, and the third set of attributes, to compute the probability score for each visual indicator.

14. The method of claim 7, wherein the compute, for each visual indicator, the probability score comprises:
for each attribute of the first set of attributes, the second set of attributes, and the third set of attributes, determining, by the visual indicator allocation model, a pre-assigned weighted score indicating comparative weightage of the attribute for computing the probability score; and
processing the first set of attributes, the second set of attributes, the third set of attributes, and the pre-assigned weighted score corresponding to each attribute of the first set of attributes, the second set of attributes, and the third set of attributes, to compute the probability score for each visual indicator.

15. A non-transitory computer-readable medium comprising instructions for generating an analytical report, the instructions being executable by a processing resource to:
obtain, utilizing a report generating application, an analytical report having analytical data associated with an organization, the analytical report comprising one or more chapters, wherein each of the one or more chapters comprises a subset of the analytical data;
identify a first set of attributes corresponding to the analytical report and a second set of attributes corresponding to each of the one or more chapters;
retrieve, from the first set of attributes, user details of a user of the organization, using the report generating application for finalizing the analytical report;
analyze the first set of attributes and the user details to identify a set of visual indicators allocated to the user for being used in the analytical report when using the report generating application, wherein the visual indicators are to provide graphical representation of the analytical data present in the analytical report; identify a third set of attributes corresponding to each visual indicator of the set of visual indicators;
obtain a pre-assigned weighted score for each attribute of the first set of attributes, the second set of attributes, and the third set of attributes corresponding to each visual indicator of the set of visual indicators;
for each chapter, process, by a visual indicator allocation model, the first set of attributes, the second set of attributes, the third set of attributes, and the pre-assigned weighted score corresponding to each attribute of the first set of attributes, the second set of attributes, and the third set of attributes, to compute a probability score for each visual indicator, wherein the probability score of a visual indicator indicates a probability of the visual indicator occurring in the chapter of the analytical report, and wherein the visual indicator allocation model is trained based on statistical analysis of one or more historical analytical reports;
for each chapter, determine, utilizing the visual indicator allocation model, at least one visual indicator, from amongst the set of visual indicators, for representing the subset of the analytical data within the chapter, wherein the probability score of the at least one visual indicator satisfies a pre-determined selection criterion; and
for each chapter of the analytical report, incorporate the at least one visual indicator into the chapter to generate a final analytical report.
